# EUROPEAN PATENT SPECIFICATION

(11) **EP 4 085 236 B1**
(45) Date of publication and mention of the grant of the patent: **09.04.2025**
(21) Application number: 20909935.7
(22) Date of filing: 31.12.2020
(51) Int. Cl.: G01G 19/42

(54) **METHODS AND SYSTEMS FOR CONDUCTING WEIGHT-BASED TRANSACTIONS**
VERFAHREN UND SYSTEME ZUM DURCHFÜHREN VON GEWICHTSBASIERTEN TRANSAKTIONEN
PROCÉDÉS ET SYSTÈMES POUR RÉALISER DES TRANSACTIONS BASÉES SUR LE POIDS

(30) Priority: 01.01.2020 GB 202000005
(43) Date of publication of application: 09.11.2022
(73) Proprietor: Shekel Scales (2008) Ltd., Nof Hagalil 1789063 (IL)
(72) Inventor: HAHAMY, Ehud, 7175947 Modiin-Maccabim-Reut (IL)
(74) Representative: Harrison IP Limited
(86) International application number: PCT/IB2020/062590
(87) International publication number: WO 2021/137190

(56) References cited:
- WO-A1-2019/220400
- WO-A1-2019/234692
- US-A- 5 671 362
- US-A1- 2019 324 441
- US-B1- 10 198 710
- US-B1- 10 198 710

## Description

### CROSS-REFERENCE TO RELATED APPLICATIONS

This invention claims priority from the following patent applications: Great Britain Patent Application No. 2000005.5, filed on January 1, 2020.

### FIELD OF THE INVENTION

The present invention relates to weighing devices and assemblies, including weighing devices and assemblies for shelves on which non-homogeneous assortments of products can be arranged, and methods for their use in conducting transactions with respect to the products by tracking the weights, locations and identifications of products added to and removed from shelves.

### BACKGROUND

Unattended or autonomous retail and inventory management are examples of areas that can benefit from the use of methods for weighing and tracking products on shelves. Technical solutions have been suggested for intelligent shelving arrangements that would track the weight of products on a shelf, including changes in the weight resulting from the addition of products or the removal of products. An example of such a suggested solution is a shelf segment assembly with load cells attached to the underside so that when the shelf segment is placed atop an existing 'regular' shelf, weights of the products on the shelf can be tracked. Such solutions are lacking in terms of being able to disambiguate unique products in diverse collections of products, instead dedicating each small shelf or shelf insert to a single product or stock-keeping unit (SKU).

Examples of shelving arrangements include connected shelving bays and standalone shelving arrangements. Connected shelving bays use a familiar type of shelving unit common in supermarkets and other retail stores. Standalone shelving arrangements are usually not connected to other shelving units and are often used in smaller retail environments such as, for example, kiosks, convenience stores, public areas of shopping malls, or shops in public venues such as train stations or airports. Either type of shelving arrangement can be suitable for practicing the embodiments disclosed herein. Document US 10 198 710 B1 discloses systems and techniques for generating interaction data at an inventory location, such as in a materials handling facility.

### SUMMARY

Embodiments of the present invention relate to methods and systems for conducting retail transactions by tracking the weights of non-homogeneous products on shelves, and identifying, from detected changes in weights and in weight distributions, which products are being added to or removed from shelves, or moved from place to place on a single shelf. Some of the embodiments relate to methods and systems for applying statistical analyses and/or probability distributions and other mathematical functions with relation to weights and products (including weights and products jointly), and machine learning algorithms including, without limitation, clustering algorithms, in the disambiguation of product identifications and of user actions taken with respect to those products.

According to embodiments of the invention, a method is disclosed for conducting a retail transaction, using a plurality of weighing assemblies that are jointly operable to measure the combined weight of the shelf and of products arranged thereupon. The method comprises: monitoring weight measurement data corresponding to the shelf and a plurality of non-homogeneous products arranged thereupon, said weight measurement data transmitted by the plurality of weighing assemblies as respective streams of weight measurement data-points; responsively to a change over time in the values of said weight measurement data-points and contingent upon said values reaching respective steady states according to a stability-tracking rule, determining a set of weight-event parameters of a weight event, the determined set of weight-event parameters comprising one or more products and a product-action respective of each one of the one or more products; and performing at least one of: (i) recording information about the results of the determining in a non-transient, computer-readable medium, and (ii) displaying information about the results of the determining on a display device. According to the method, the weight measurement data-points comprise at least one type of data selected from the group comprising calculated weights and voltage inputs thereto.

In some embodiments, the method can additionally comprise receiving an indication of a transaction-initiation, and said monitoring can be in response to the receiving.

In some embodiments, the stability-tracking rule can include that said respective steady states for the streams of weight measurement data-points are defined by respective response-amplitude thresholds.

In some embodiments, applying the stability tracking rule can include estimating bias in the weight measurement data-points and compensating for said bias.

In some embodiments, the weight measurement data-points can either comprise voltage inputs or solely comprise voltage inputs.

In some embodiments, said determining can include estimating a joint weight-location event-based product classifier. In some embodiments, estimating the joint weight-location event-based product classifier can include estimating a joint weight-location probability density. In some embodiments, estimating the joint weight-location event-based product classifier can include applying a statistical classification mechanism trained by weight and location information to perform a statistical inference.

In some embodiments, the weight measurement data-points can be the only inputs to said determining that are generated by sensors during the transaction.

In some embodiments, the method can additionally comprise, before said determining: responsively to a change over time in the values of transmitted weight measurement data-points, analyzing each of the streams of weight measurement data-points to detect at least one of noise and drift; and in response to the detection of said at least one of noise and drift, performing at least one of (A) at least partially filtering out the noise and/or drift and (B) at least partially compensating for the noise and/or drift in the weight measurement data points, such that the performing generates revised weight measurement data.

According to embodiments of the invention, a method is disclosed for conducting a retail transaction, using a plurality of weighing assemblies that are jointly operable to measure the combined weight of the shelf and of non-homogeneous products arranged thereupon. The method comprises: monitoring weight measurement data corresponding to the weight of the shelf and of the products arranged thereupon, said weight measurement data transmitted from a plurality of weighing assemblies as respective streams of weight measurement data points; and responsively to a change over time in the values of said weight measurement data, determining a set of weight-event parameters of a weight event, the determined set of weight-event parameters comprising one or more products and a product-action respective of each one of the one or more products. According to the method, the determining comprises: identifying one or more supported sets of weight-event parameters in a weight-location space, and applying a joint weight-location event-based classification function to select a set of weight-event parameters from the identified one or more supported sets.

In some embodiments, applying the joint weight-location event-based classification function can include estimating a joint weight-location probability density. According to embodiments of the invention, a method is disclosed for conducting applying the joint weight-location event-based classification function can include applying a statistical classification mechanism trained by weight and location information to perform a statistical inference.

In some embodiments, the determining can be based on product weight-distribution data retrieved from a product database. In some embodiments, the determining is based on a product positioning plan.

In some embodiments, the estimating of the joint weight-location probability density can include iteratively improving initial weight and/or location estimations.

In some embodiments, the applying of the classification function can include Bayesian hierarchical modelling.

In some embodiments, the weight measurement data-points can be the only inputs to said determining that are generated by sensors during the transaction.

In some embodiments, the determining can be carried out responsively to an absolute value of the change over time in the values of said weight measurement data exceeding a pre-determined threshold.

In some embodiments, the weight measurement data-points can either comprise voltage inputs or solely comprise voltage inputs.

According to embodiments of the invention, a method is disclosed for conducting a retail transaction, using a plurality of weighing assemblies that are jointly operable to measure the combined weight of the shelf and of products arranged thereupon. The method comprises: receiving respective time-series of weight measurement data points from a plurality of weighing assemblies; updating an estimation of bias in the weight measurement data points received from one or more weighing assemblies of the plurality of weighing assemblies, by applying a clustering algorithm to said time-series; and determining a set of weight-event parameters of a weight event, the determined set of weight-event parameters comprising one or more products and a product-action respective of each one of the one or more products. According to the method the determining includes compensating for the estimated bias.

In some embodiments, the updating the estimation of bias can include accessing historical bias data.

In some embodiments, the compensating for the estimated bias can include correcting an estimation of weight and/or location.

In some embodiments, the determined set of weight-event parameters can be changed because of the compensating for the estimated bias.

In some embodiments, the determining can comprise: identifying one or more supported sets of weight-event parameters in a weight-location space, and
applying a joint weight-location event-based classification function to select a set of weight-event parameters from the identified one or more supported sets.

In some embodiments, applying the joint weight-location event-based classification function can include estimating a joint weight-location probability density. In some embodiments, applying the joint weight-location event-based classification function can include applying a statistical classification mechanism trained by weight and location information to perform a statistical inference.

In some embodiments, the method can additionally comprise, before said determining: responsively to a change over time in the values of transmitted weight measurement data-points, analyzing each of the streams of weight measurement data points to detect at least one of noise and drift; and in response to the detection of said at least one of noise and drift, performing at least one of (A) at least partially filtering out the noise and/or drift and (B) at least partially compensating for the noise and/or drift in the weight measurement data points, such that the performing generates revised weight measurement data, wherein said determining is based on a change in values in said revised weight measurement data.

According to embodiments of the invention, a method is disclosed for conducting a retail transaction, using a plurality of weighing assemblies that are jointly operable to measure the combined weight of the shelf and of products arranged thereupon. The method comprises: receiving an indication of a transaction-initiation; in response to said receiving, monitoring weight measurement data corresponding to the shelf and a plurality of non-homogeneous products arranged thereupon, said weight measurement data transmitted by the plurality of weighing assemblies as respective streams of weight measurement data-points; responsively to a change over time in the values of said weight measurement data-points, determining a set of weight-event parameters of a weight event using at least one stability rule, the determined set of weight-event parameters comprising one or more products and a product-action respective of each one of the one or more products; and performing at least one of: (i) recording information about the results of the determining in a non-transient, computer-readable medium, and (ii) displaying information about the results of the determining on a display device.

In some embodiments, the method can additionally comprise receiving an indication of a transaction-completion.

In some embodiments, a first stability-tracking rule can be based on tracking a dynamic response of a weighing assembly to said weight event. In some embodiments, a second stability-tracking rule can be based on a stability attribute of a product. In some embodiments, a third stability-tracking rule is based on a stability attribute of the shelf. In some embodiments, said transaction-initiation can include opening and/or closing a door, and a fourth stability-tracking rule can include tracking a shock response to said transaction-initiation.

In some embodiments, said determining can comprise: identifying one or more supported sets of weight-event parameters in a weight-location space, and applying a joint weight-location event-based classification function to select a set of weight-event parameters from the identified one or more supported sets.

In some embodiments, the method can additionally comprise before said determining: responsively to a change over time in the values of transmitted weight measurement data-points, analyzing each of the streams of weight measurement data points to detect at least one of noise and drift; in response to the detection of said at least one of noise and drift, performing at least one of (A) at least partially filtering out the noise and/or drift and (B) at least partially compensating for the noise and/or drift in the weight measurement data points, such that the performing generates revised weight measurement data, wherein said determining is based on a change in values in said revised weight measurement data.

According to embodiments of the invention, a method is disclosed for conducting a retail transaction, using a plurality of weighing assemblies that are jointly operable to measure the combined weight of the shelf and of products arranged thereupon. The method comprises: receiving an indication of a transaction-initiation; in response to said receiving, monitoring weight measurement data corresponding to the shelf and a plurality of non-homogeneous products arranged thereupon, said weight measurement data transmitted by the plurality of weighing assemblies as respective streams of weight measurement data-points; and responsively to a change over time in the values of said weight measurement data-points, determining a set of weight-event parameters of a weight event using at least one stability rule, the determined set of weight-event parameters comprising one or more products and a product-action respective of each one of the one or more products. According to the method, said indication of the transaction-initiation includes one of (i) a mechanical shock indicating a door opening and/or closing, (ii) a lidar or radar reading of a hand reaching to the shelf, (iii) an electronic or optical reading of a payment or subscription medium, and (iv) a biometric reading of a user.

In some embodiments, said determining comprises: identifying one or more supported sets of weight-event parameters in a weight-location space, and applying a joint weight-location event-based classification function to select a set of weight-event parameters from the identified one or more supported sets.

According to embodiments of the invention, a system for conducting a retail transaction comprises: a plurality of weighing assemblies in contact with a shelf and jointly operable to measure a combined weight of a shelf and of products arranged thereupon; one or more computer processors; and a non-transient computer-readable storage medium comprising program instructions, which when executed by the one or more computer processors, cause the one or more computer processors to carry out the following steps: monitoring weight measurement data corresponding to the shelf and a plurality of non-homogeneous products arranged thereupon, said weight measurement data transmitted by the plurality of weighing assemblies as respective streams of weight measurement data-points; responsively to a change over time in the values of said weight measurement data-points and contingent upon said values reaching respective steady states according to a stability-tracking rule, determining a set of weight-event parameters of a weight event, the determined set of weight-event parameters comprising one or more products and a product-action respective of each one of the one or more products; and performing at least one of: (A) recording information about the results of the determining in a non-transient, computer-readable medium, and (B) displaying information about the results of the determining on a display device. According to the program instructions, the weight measurement data-points comprise at least one type of data selected from the group comprising calculated weights and voltage inputs thereto.

In some embodiments, the program instructions, when executed by the one or more computer processors, can additionally cause the one or more computer processors to carry out the following step: receiving an indication of a transaction-initiation, and the carrying out of the monitoring step can be in response to the receiving.

In some embodiments, the stability-tracking rule can include that said respective steady states for the streams of weight measurement data-points are defined by respective response-amplitude thresholds.

In some embodiments, applying the stability tracking rule can include estimating bias in the weight measurement data-points and compensating for said bias.

In some embodiments, the weight measurement data-points can either comprise voltage inputs or solely comprise voltage inputs.

In some embodiments, the determining step can include estimating a joint weight-location event-based product classifier.

In some embodiments, estimating the joint weight-location event-based product classifier can include estimating a joint weight-location probability density.

In some embodiments, estimating the joint weight-location event-based product classifier can include applying a statistical classification mechanism trained by weight and location information to perform a statistical inference.

In some embodiments, the weight measurement data-points can be the only inputs to the determining step that are generated by sensors during the transaction.

In some embodiments, the program instructions, when executed by the one or more computer processors, can additionally cause the one or more computer processors to carry out the following steps before the determining step: responsively to a change over time in the values of transmitted weight measurement data-points, analyzing each of the streams of weight measurement data-points to detect at least one of noise and drift; and in response to the detection of said at least one of noise and drift, performing at least one of (A) at least partially filtering out the noise and/or drift and (B) at least partially compensating for the noise and/or drift in the weight measurement data points, such that the performing generates revised weight measurement data.

According to embodiments of the invention, a system for conducting a retail transaction comprises: a plurality of weighing assemblies in contact with a shelf and jointly operable to measure a combined weight of a shelf and of products arranged thereupon; one or more computer processors; and a non-transient computer-readable storage medium comprising program instructions, which when executed by the one or more computer processors, cause the one or more computer processors to carry out the following steps: monitoring weight measurement data corresponding to the weight of the shelf and of the products arranged thereupon, said weight measurement data transmitted from a plurality of weighing assemblies as respective streams of weight measurement data points; and responsively to a change over time in the values of said weight measurement data, determining a set of weight-event parameters of a weight event, the determined set of weight-event parameters comprising one or more products and a product-action respective of each one of the one or more products, wherein the determining comprises: identifying one or more supported sets of weight-event parameters in a weight-location space, and applying a joint weight-location event-based classification function to select a set of weight-event parameters from the identified one or more supported sets.

In some embodiments, applying the joint weight-location event-based classification function can include estimating a joint weight-location probability density. In some embodiments, applying the joint weight-location event-based classification function includes applying a statistical classification mechanism trained by weight and location information to perform a statistical inference.

In some embodiments, the determining can be based on product weight-distribution data retrieved from a product database. In some embodiments, the determining can be based on a product positioning plan.

In some embodiments, the estimating of the joint weight-location probability density can include iteratively improving initial weight and/or location estimations.

In some embodiments, the applying of the classification function can include Bayesian hierarchical modelling.

In some embodiments, the weight measurement data-points can be the only inputs to said determining that are generated by sensors during the transaction.

In some embodiments, the determining step can be carried out responsively to an absolute value of the change over time in the values of said weight measurement data exceeding a pre-determined threshold.

In some embodiments, the weight measurement data-points can either comprise voltage inputs or solely comprise voltage inputs.

According to embodiments of the invention, a system for conducting a retail transaction comprises: a plurality of weighing assemblies in contact with a shelf and jointly operable to measure a combined weight of a shelf and of products arranged thereupon; one or more computer processors; and a non-transient computer-readable storage medium comprising program instructions, which when executed by the one or more computer processors, cause the one or more computer processors to carry out the following steps: receiving respective time-series of weight measurement data points from a plurality of weighing assemblies; updating an estimation of bias in the weight measurement data points received from one or more weighing assemblies of the plurality of weighing assemblies, by applying a clustering algorithm to said time-series; and determining a set of weight-event parameters of a weight event, the determined set of weight-event parameters comprising one or more products and a product-action respective of each one of the one or more products. According to the program instructions, the determining includes compensating for the estimated bias.

In some embodiments, updating the estimation of bias can include accessing historical bias data.

In some embodiments, the compensating for the estimated bias can include correcting an estimation of weight and/or location.

In some embodiments, the determined set of weight-event parameters can be changed because of the compensating for the estimated bias.

In some embodiments, the determining step can comprise: identifying one or more supported sets of weight-event parameters in a weight-location space, and applying a joint weight-location event-based classification function to select a set of weight-event parameters from the identified one or more supported sets. In some embodiments, applying the joint weight-location event-based classification function can include estimating a joint weight-location probability density. In some embodiments, applying the joint weight-location event-based classification function can include applying a statistical classification mechanism trained by weight and location information to perform a statistical inference.

In some embodiments, the program instructions, when executed by the one or more computer processors, can additionally cause the one or more computer processors to carry out the following steps before the determining step: responsively to a change over time in the values of transmitted weight measurement data-points, analyzing each of the streams of weight measurement data points to detect at least one of noise and drift; and in response to the detection of said at least one of noise and drift, performing at least one of (A) at least partially filtering out the noise and/or drift and (B) at least partially compensating for the noise and/or drift in the weight measurement data points, such that the performing generates revised weight measurement data, wherein said determining is based on a change in values in said revised weight measurement data.

According to embodiments of the invention, a system for conducting a retail transaction comprises: a plurality of weighing assemblies in contact with a shelf and jointly operable to measure a combined weight of a shelf and of products arranged thereupon; one or more computer processors; and a non-transient computer-readable storage medium comprising program instructions, which when executed by the one or more computer processors, cause the one or more computer processors to carry out the following steps: receiving an indication of a transaction-initiation; in response to said receiving, monitoring weight measurement data corresponding to the shelf and a plurality of non-homogeneous products arranged thereupon, said weight measurement data transmitted by the plurality of weighing assemblies as respective streams of weight measurement data-points; responsively to a change over time in the values of said weight measurement data-points, determining a set of weight-event parameters of a weight event using at least one stability rule, the determined set of weight-event parameters comprising one or more products and a product-action respective of each one of the one or more products; and performing at least one of: (i) recording information about the results of the determining in a non-transient, computer-readable medium, and (ii) displaying information about the results of the determining on a display device.

In some embodiments, the program instructions, when executed by the one or more computer processors, can additionally cause the one or more computer processors to carry out the following step: receiving an indication of a transaction-completion.

In some embodiments, a first stability-tracking rule can be based on tracking a dynamic response of a weighing assembly to said weight event. In some embodiments, a second stability-tracking rule can be based on a stability attribute of a product. In some embodiments, a third stability-tracking rule can be based on a stability attribute of the shelf. In some embodiments, said transaction-initiation can include opening and/or closing a door, and a fourth stability-tracking rule can include tracking a shock response to said transaction-initiation.

In some embodiments, the determining step can comprise: identifying one or more supported sets of weight-event parameters in a weight-location space, and applying a joint weight-location event-based classification function to select a set of weight-event parameters from the identified one or more supported sets.

In some embodiments, the program instructions, when executed by the one or more computer processors, can additionally cause the one or more computer processors to carry out the following steps before the determining step: responsively to a change over time in the values of transmitted weight measurement data-points, analyzing each of the streams of weight measurement data points to detect at least one of noise and drift; and in response to the detection of said at least one of noise and drift, performing at least one of (A) at least partially filtering out the noise and/or drift and (B) at least partially compensating for the noise and/or drift in the weight measurement data points, such that the performing generates revised weight measurement data wherein said determining is based on a change in values in said revised weight measurement data.

According to embodiments of the invention, a system for conducting a retail transaction comprises: a plurality of weighing assemblies in contact with a shelf and jointly operable to measure a combined weight of a shelf and of products arranged thereupon; one or more computer processors; and a non-transient computer-readable storage medium comprising program instructions, which when executed by the one or more computer processors, cause the one or more computer processors to carry out the following steps: receiving an indication of a transaction-initiation; in response to said receiving, monitoring weight measurement data corresponding to the shelf and a plurality of non-homogeneous products arranged thereupon, said weight measurement data transmitted by the plurality of weighing assemblies as respective streams of weight measurement data-points; and responsively to a change over time in the values of said weight measurement data-points, determining a set of weight-event parameters of a weight event using at least one stability rule, the determined set of weight-event parameters comprising one or more products and a product-action respective of each one of the one or more products. According to the program instructions, said indication of the transaction-initiation includes one of (i) a mechanical shock indicating a door opening and/or closing, (ii) a lidar or radar reading of a hand reaching to the shelf, (iii) an electronic or optical reading of a payment or subscription medium, and (iv) a biometric reading of a user.

In some embodiments the determining step can comprises: identifying one or more supported sets of weight-event parameters in a weight-location space, and applying a joint weight-location event-based classification function to select a set of weight-event parameters from the identified one or more supported sets.

A method is disclosed for tracking non-homogeneous products on a shelf by using a plurality of weighing assemblies that are jointly operable to measure the combined weight of the shelf and of the products arranged thereupon, wherein the method comprises: monitoring weight measurement data corresponding to the weight of the shelf and the products arranged thereupon, said weight measurement data measured by the plurality of weighing assemblies and transmitted therefrom as respective streams of weight measurement data points, responsively to a change over time in the values of said weight measurement data, determining a set of weight-event parameters of a weight event, the set of weight-event parameters comprising a product identification and an action taken with respect to the product; and performing at least one of: recording information about the results of the determining in a non-transient, computer-readable medium, and displaying information about the results of the determining on a display device.

In some embodiments, the method can additionally comprise receiving an indication of a transaction-initiation, and said monitoring can be in response to the receiving.

In some embodiments, the stability-tracking rule can include that said respective steady states for the streams of weight measurement data-points are defined by respective response-amplitude thresholds.

In some embodiments, applying the stability tracking rule can include estimating bias in the weight measurement data-points and compensating for said bias.

In some embodiments, the weight measurement data-points can either comprise voltage inputs or solely comprise voltage inputs.

In some embodiments, said determining can include estimating a joint weight-location event-based product classifier. In some embodiments, estimating the joint weight-location event-based product classifier can include estimating a joint weight-location probability density. In some embodiments, estimating the joint weight-location event-based product classifier can include applying a statistical classification mechanism trained by weight and location information to perform a statistical inference.

In some embodiments, the weight measurement data-points can be the only inputs to said determining that are generated by sensors during the transaction.

In some embodiments, the method can additionally comprise, before said determining: responsively to a change over time in the values of transmitted weight measurement data-points, analyzing each of the streams of weight measurement data-points to detect at least one of noise and drift; and in response to the detection of said at least one of noise and drift, performing at least one of (A) at least partially filtering out the noise and/or drift and (B) at least partially compensating for the noise and/or drift in the weight measurement data points, such that the performing generates revised weight measurement data.

In some embodiments, the determining can be based on product weight-distribution data retrieved from a product database. In some embodiments, the determining is based on a product positioning plan.

In some embodiments, the estimating of the joint weight-location probability density can include iteratively improving initial weight and/or location estimations.

In some embodiments, the applying of the classification function can include Bayesian hierarchical modelling.

According to the method the determining includes compensating for the estimated bias.

In some embodiments, the updating the estimation of bias can include accessing historical bias data.

In some embodiments, the compensating for the estimated bias can include correcting an estimation of weight and/or location.

In some embodiments, the determined set of weight-event parameters can be changed because of the compensating for the estimated bias.

In some embodiments, the determining can comprise: identifying one or more supported sets of weight-event parameters in a weight-location space, and applying a joint weight-location event-based classification function to select a set of weight-event parameters from the identified one or more supported sets.

In some embodiments, applying the joint weight-location event-based classification function can include estimating a joint weight-location probability density. In some embodiments, applying the joint weight-location event-based classification function can include applying a statistical classification mechanism trained by weight and location information to perform a statistical inference.

In some embodiments, the method can additionally comprise receiving an indication of a transaction-completion.

In some embodiments, a first stability-tracking rule can be based on tracking a dynamic response of a weighing assembly to said weight event. In some embodiments, a second stability-tracking rule can be based on a stability attribute of a product. In some embodiments, a third stability-tracking rule is based on a stability attribute of the shelf. In some embodiments, said transaction-initiation can include opening and/or closing a door, and a fourth stability-tracking rule can include tracking a shock response to said transaction-initiation.

### BRIEF DESCRIPTION OF THE DRAWINGS

The invention will now be described further, by way of example, with reference to the accompanying drawings, in which the dimensions of components and features shown in the figures are chosen for convenience and clarity of presentation and not necessarily to scale. In the drawings:
Fig. 1A is a schematic perspective view of a shelf with a diverse plurality of products arranged thereupon, according to embodiments of the present invention;
Fig. 1B is a schematic perspective view of a shelf and products of Fig. 1A, the shelf being in contact with a shelf base comprising a plurality of weighing assemblies, according to embodiments of the present invention;
Fig. 2A is a schematic perspective view of a bracket assembly for a shelving bay, comprising a plurality of weighing assemblies, according to embodiments of the present invention;
Fig. 2B is a schematic perspective view of a prior art double-sided gondola-type shelving arrangement comprising three shelving units;
Fig. 3A and 3B are respectively perspective and exploded schematic perspective views of a weighing assembly including two shelf brackets, according to embodiments of the present invention;
Fig. 4A is a schematic perspective view of a weighing-enabled shelving unit and system, showing a detail of an attachment element, according to embodiments of the present invention;
Fig. 4B is a schematic perspective view of a weighing-enabled refrigerator according to embodiments of the present invention;
Figs. 5A and 5B are respective assembled and exploded schematic perspective views of a shelving unit, according to embodiments of the present invention;
Fig. 5C shows a protruding element and receiving element according to the prior art;
Fig. 5D shows a top-perspective schematic view of a shelf assembly according to embodiments of the present invention.
Fig. 5E shows a weighing base of the shelf assembly of Fig. 5C.
Fig. 5F shows a bottom-perspective schematic view of the shelf assembly of Fig. 5C.
Fig. 6 is a schematic perspective view of a shelf assembly according to another embodiment of the present invention;
Fig. 7 shows a block diagram of a first system for conducting a retail transaction, based on the shelving arrangement of Fig. 2B, according to embodiments of the present invention;
Figs. 8A and 8B show block diagrams of examples of a second system for conducting a retail transaction, based on the shelving unit and system of Fig. 4A, according to embodiments of the present invention;
Fig. 8C shows a block diagram of a third example of a second system for conducting a retail transaction, based on the shelving unit and system of Fig. 4B, according to embodiments of the present invention;
Fig. 9 shows a flowchart of a method for conducting a retail transaction, according to embodiments of the present invention;
Fig. 10 is a graph showing dynamic load cell response to a hypothetical weight event;
Fig. 11 is a schematic plan view of a shelf, showing the product location of a weight event, according to embodiments of the present invention;
Fig. 12 shows a schematic perspective view of the shelf of Fig. 11 with a weight-location probability distribution function mapped to the shelf, according to embodiments of the present invention;

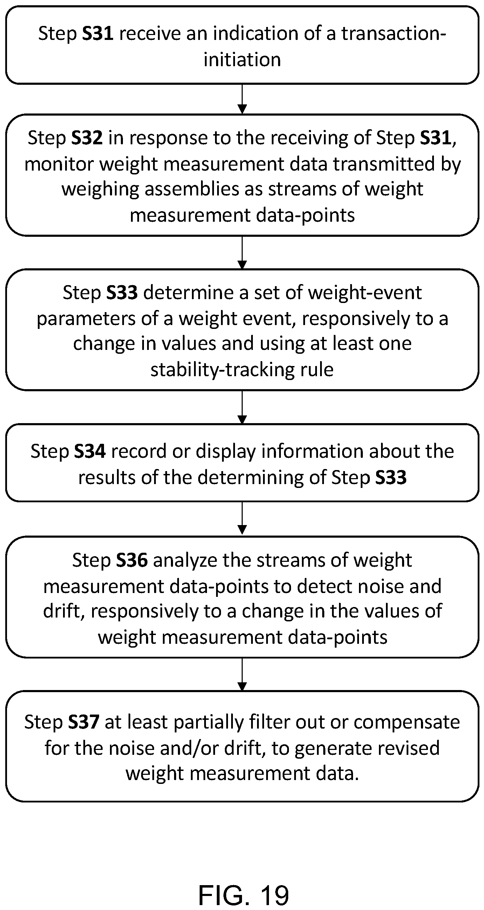

Figs. 13-20 show flowcharts of methods for conducting a retail transaction, according to embodiments of the present invention; and
Fig. 21 shows a block diagram of a system for conducting a retail transaction in respect of a non-homogeneous assortment of products on a shelf, according to embodiments of the present invention.

### DETAILED DESCRIPTION OF THE ILLUSTRATED EMBODIMENTS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. Throughout the drawings, like-referenced characters are generally used to designate like elements. Subscripted reference numbers (e.g., 10₁ or 101_{L}) and number-letter combinations (e.g. 130a) are used to designate multiple separate appearances of elements in a single drawing, e.g. 101₁ is a single appearance (out of a plurality of appearances) of element 10, 101_{L} is a left-side appearance (out of a plurality of appearances) of element 101, and 130a is a single appearance (out of a plurality of appearances) of element 130.

In accordance with embodiments of the invention, methods and systems are disclosed for conducting transactions, including autonomous retail transactions. The transactions are conducted using weighing systems capable of identifying products added to, removed from, or moved within a shelf, using historical and derived data such as weight distributions for specific products, product placement plans and signal bias, by analyzing signals containing streams of weight measurement data points to detect changes in values over time as well as noise, drift (including periodic drift) and bias, and by building joint weight-location classifying functions for mapping product weight-events to products, events and locations.

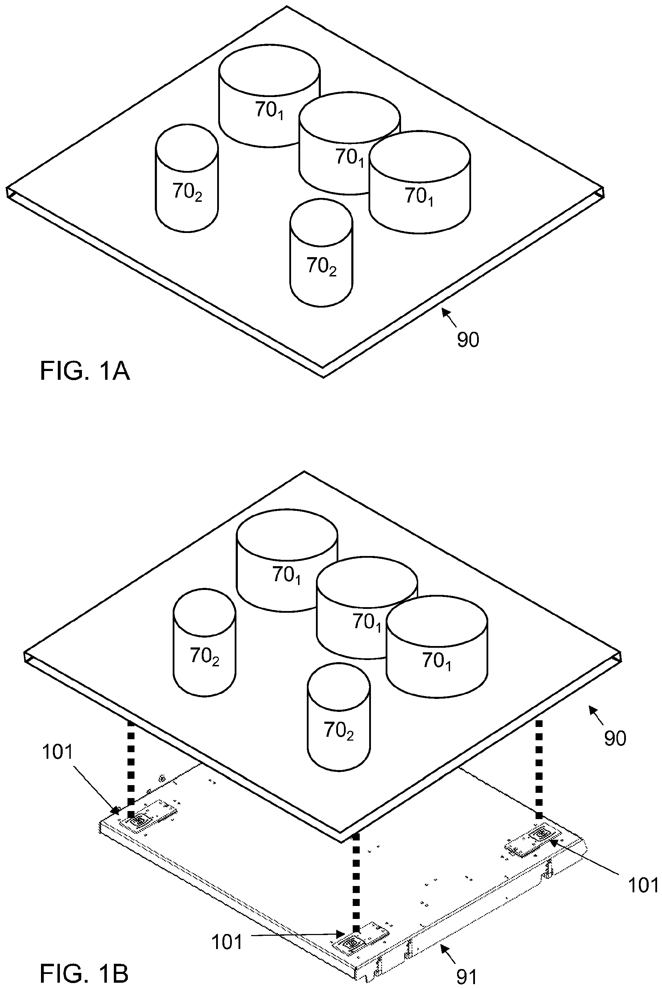

We now refer to Figs. 1A and 1B. In embodiments, a shelf **90** is provided for storing or displaying non-homogeneous products **70.** Products can be diverse, e.g., **70₁** and **70₂** are different products, and any number of each type of different products can be placed on a shelf **90.** While shown as differing in size and shape, they can also differ in weight or contents, and can be distinguished by having different SKUs, i.e., stock-keeping unit identification numbers, or by other unique identifiers. While shown as differing in size and shape, they can also differ in weight, dimensions, contents or weight history (e.g., a histogram of past weight values for each respective product), and can be distinguished by having different SKUs, i.e., stock-keeping unit identification numbers, or by other unique identifiers. As used herein, the term "SKU" means stock-keeping unit. The use of SKU-identifiers is a standard means of identifying unique products across industries. Unique products can be, for example, products defined by unique combinations of physical characteristics, e.g., weight (whether nominal or average), volume, dimensions, etc. and/or non-physical characteristics, e.g., brand or packaging design. It can be that two products can be similar in physical characteristics but have different SKU-identifiers; in some embodiments they can be considered as 'non-homogeneous' and in other embodiments they may not. However, any use of the term 'products' in this disclosure or in the claims attached thereto includes the concept of 'non-homogeneous products.' In an example, a particular brand of cookies may offer products with a number of different SKU-identifiers: a first SKU for the brand's large package of large chocolate cookies, a second SKU for the brand's small package of the same large chocolate cookies, and a third SKU for the brand's large package of small chocolate cookies, and so on. The term "non-homogeneous", as applied herein to a group of products, means that the products in the group do not all share the same SKU-identifier, but should not be understood to imply that each product in a group has a unique SKU-identifier. For example, a group of non-homogeneous products might include: (a) 10 large packages of large chocolate cookies bearing a first brand and having a first SKU-identifier, and (b) 2 large packages of small chocolate cookies from a second brand and having a second SKU-identifier, or, without limitation any combination of products having, in combination, two or more SKU-identifiers. A group of products having, in combination, two or more SKU-identifiers can be considered 'non-homogeneous' with respect to one another. Thus, within any group of non-homogeneous products, products can differ from other members of the group in terms of, and not exhaustively: product packaging design and/or materials, weight, size, one or more external dimensions, brand, contents, list of ingredients, size and number of sub-divisions within a product packaging, and product-weight history such as can be represented by a database of past weight data, where the past weight data can encompass not only total weight but also the distribution of weight over the footprint of the product.

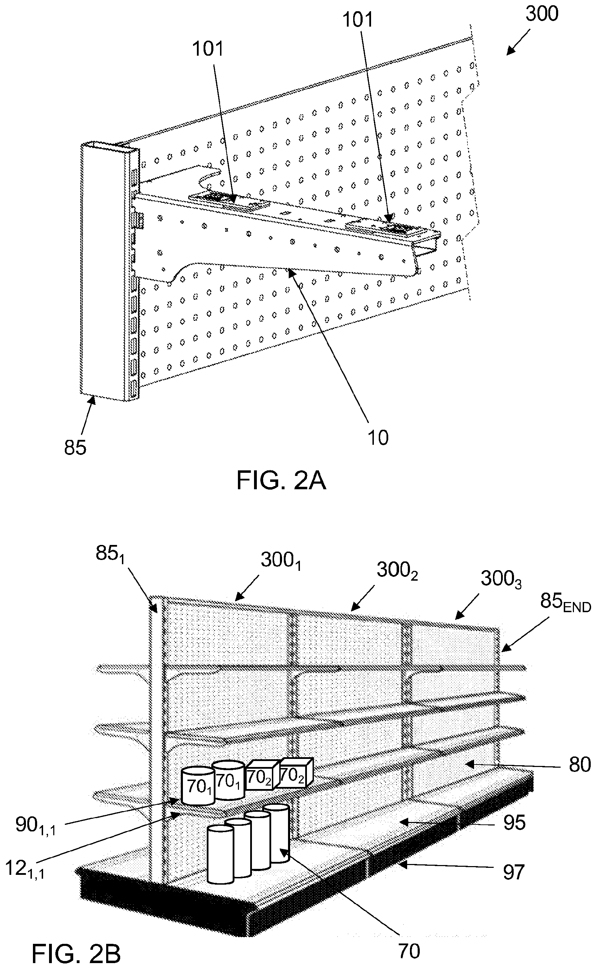

As shown in Fig. 1B, the shelf **90** can be in contact, at least indirectly, with weighing assemblies **101,** so that the weighing assemblies **101** can measure the weight of the shelf **70** and of products **70** on the shelf **90.** In the non-limiting example of Fig. 1B, the weighing assemblies **101** are provided as part of a shelf base **91** which supports the shelf **90** when installed. In another non-limiting example illustrated in Fig. 2A, weighing assemblies **101** are provided in a bracket assembly **10** attached to an upright **85** of a shelving unit **300** of a connected retail-type shelving bay, and a shelf **90** can be supported by two such bracket assemblies **10** provided at opposite ends of the shelf **90.** The weighing assemblies **101** are illustrated as planar load cell assemblies, but any suitable weight sensor can be used, although preferably one with fast response time and high levels of precision.

Weighing assemblies **101** can include internal processors (not shown), which can be configured, for example, to sample continuous or discrete weight measurements and transmit streams of weight measurement data points to an external processor, using internal communications arrangements (not shown). The sampling rate is preferably at least 50 Hz, or at least 100 Hz, or at least 200 Hz, or higher. A high sampling rate can be helpful, for example, if it is desired to filter out noise. An electronic signal transmitting a stream of weight measurement data points can be analyzed to detect noise, for example by decomposing the signal into component frequencies using a Fourier transform, as is known in the art. Noise in the signal can come from mechanical and/or environmental sources, for example from vibrations due to mechanical equipment in the area. As is known in the art, strain gauge load cells output voltages that correspond to forces acting upon the load cell, or, equivalently to reaction forces of the load cell. In some embodiments, the weight measurement data points solely comprise voltage measurements. In some embodiments, the weight measurement data points additionally or alternatively comprise weight data calculated from the voltages which are inputs thereto.

Any planar load cell assembly can be suitable for use herein. A planar load cell assembly suitable for use with the present invention is disclosed in co-pending PCT application PCT/IB2019/055488, titled "Systems and Methods for Weighing Products on a Shelf" and filed on June 28, 2019. It can be desirable to employ a load cell with a 'high' ratio of width to thickness, where 'width' is the dimension across a plan view of the planar load cell assembly, and thickness is the dimension across a side view. Exemplary suitable load cell assemblies can have a width-to-thickness ratio of more than 10. In some embodiments, the 'high' width-to-thickness ratio can be more than 2, more than 3, more than 5, or more than 10.

### Examples of retailing units

With reference to Figs. 2B, 3A-B, 4, 5A-C, and 6, several non-limiting illustrative examples of retailing units suitable for use in connection with the present invention are now described.

A concatenated assembly of three shelving units **300** is shown schematically in Figure 2B as a non-limiting example of a plurality of weighing assemblies mounted in shelving units. A variety of products **70** are displayed in shelving unit **300₁,** including, on shelf **90₁₋₁** (the double subscript 1-1 indicating the first shelf of the first shelving unit **300₁**) supported by shelf bracket **12₁₋₁,** a first plurality of products **70₁** with a first SKU-identifier and a second plurality of products **70₂** with a second SKU-identifier.

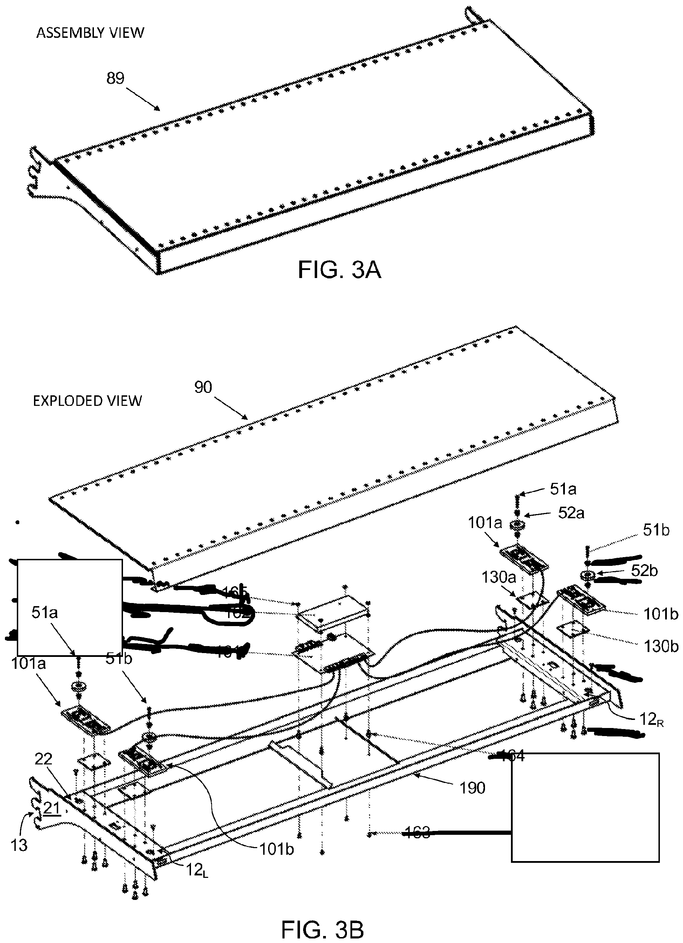

Reference is now made to Figs. 3A and 3B, which respectively, show an assembled weighing assembly **89** comprising two shelf brackets **12_{L}** and **12_{R}** according to embodiments of the present invention, and an exploded view of the weighing assembly. The weighing assembly **89** of Figs. 3A and 3B is self-stabilizing, i.e., does not require the use of an additional stabilizing element or connection to a back wall of a shelving unit, and can be installed in a shelving unit (e.g., shelving unit 300) without any tools and by a single employee.

Substantially as shown, each of the two shelf brackets **12_{L}** and **12_{R}** may comprise a vertical member **21** which includes industry-standard bracket hooks **13** for engaging with uprights **85,** and a horizontal member **22.** Planar load cells are fixed to the shelf bracket **12** by anchoring them on a 'base' which, according to embodiments, can include the shelf bracket **12** and a shim (adapter plate) **130.** Thus, load cell assemblies **101a, 101b** can be attached (by screw or rivet or any other appropriate attaching method) to a respective shim **130a, 130b** and, in this way, complete the installation of the load cell assemblies on the 'base'.

The two shelf brackets **12_{L}** and **12_{R}** are joined mechanically by a shelf frame **190** which, although illustrated as a simple frame, can include any member(s) that, when joined with the shelf brackets **12_{L}** and **12_{R}**, provide rigidity. The shelf frame **190** can be an 'open structural member' as shown in non-limiting example shown in Fig. 3B, as the 'openness' serves to reduce the weight and cost of the illustrated structural member, but this only is for purposes of illustration and the shelf frame need not be open if it is deemed desirable by a designer to use a solid, non-open member or assembly of members that provides structural rigidity at an acceptable weight and cost. Shelf frame **190** can be fabricated from any material such as a metal or a plastic deemed suitable in terms of rigidity, weight and cost.

As discussed earlier, protruding elements **51a, 51b,** together with the joining elements **52a, 52b,** can function to transfer the load (weight) of a shelf **90** and any products displayed thereupon to the load cell assemblies **101a, 101b.** In embodiments, the protruding elements **51** can transfer the load directly by having a lower end positioned in a receptacle in the load cell assembly **101** and in other embodiments the protruding elements function to ensure the positioning of the joining elements **52** on the load cell assemblies **101** so as to transfer the load to the load cell assemblies **101** via the joining elements **52.** In some embodiments, protruding elements **51** and joining elements **52** can be threaded (e.g., a threaded bolt and respective nut) and in other embodiments they can be unthreaded (e.g., a simple bolt and respective washer). In some embodiments both a threaded nut and a washer may be provided. One of ordinary skill in the art will appreciate that various conventional arrangements can be employed for coupling the load (shelf **90**) to the load cell assemblies **101a, 101b.**

In the non-limiting example of Fig. 3B, a processor **161** is provided on-board the weighing assembly **89** in order to simplify communication with load cell assemblies. In the illustrated example, processor **161** is affixed to the shelf frame **190** with upper fasteners **165** and lower fasteners **163.** A processor cover **162** can be provided, e.g., to protect the processor from dust, moisture or detritus, and spacers **164** may be used to isolate the processor from a metallic shelf frame **190.**

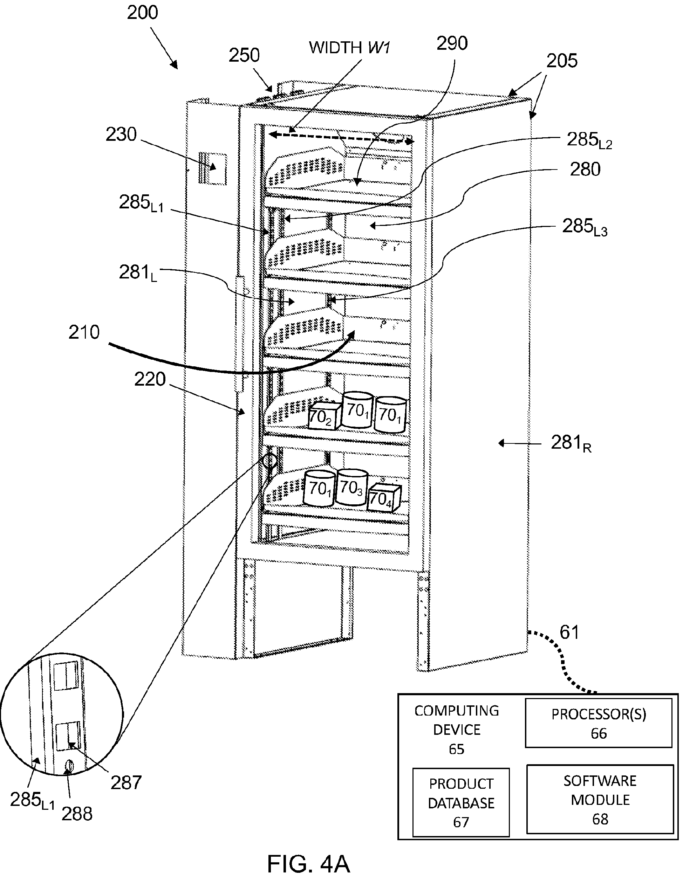

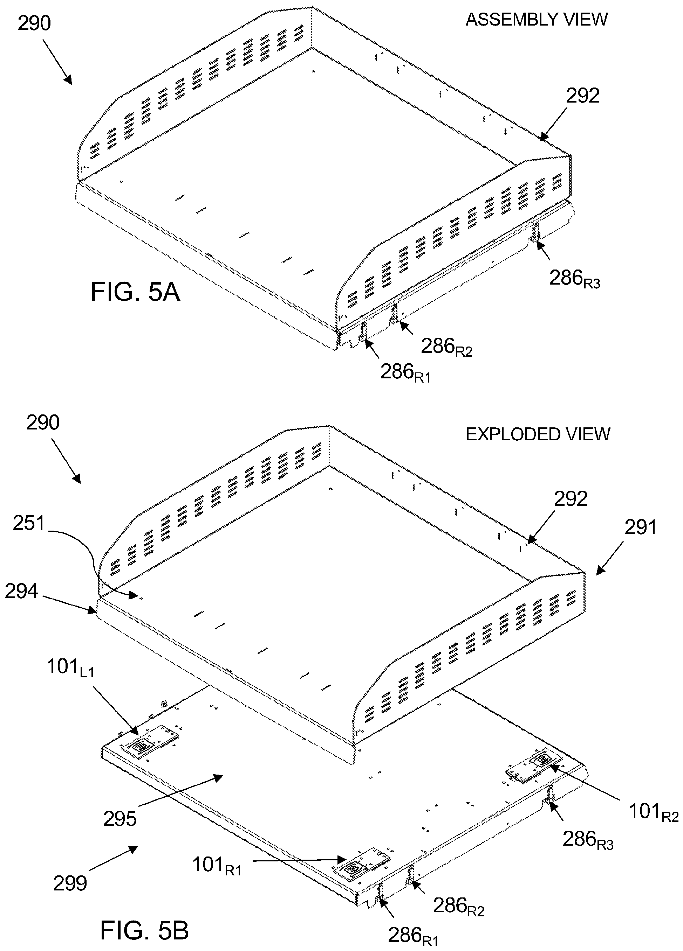

In embodiments, a weighing-enabled shelving arrangement can be a standalone unit adapted for retail sales transactions. In a non-limiting example shown in Fig. 4A, a weighing-enabled standalone shelving unit **200** includes a shelving volume **210** defined by shelving housing **205,** the shelving volume **210** enclosed by left and right walls **281_{L}** and **281_{R}**, and back wall **280.** In some embodiments any one or more of left and right walls **281_{L}** and **281_{R}**, and back wall **280** can be a partial wall. The weighing capabilities and weighing-relevant components of shelf assemblies **290** are discussed hereinbelow in connection with Fig. 5B. A door **220** can be provided on or near the front boundary of the shelving unit **200** (front being the direction open for access to a shelving volume **210** enclosed on three sides), the door being operative in some embodiments to preserve the interior temperature of the shelving unit **200** in the case that it is a refrigerated unit, and in some embodiments being operative for any one or more of improving hygiene, limiting entry of dust and dirt, limiting customer interaction with the products while choosing, and having a locking mechanism so as to control access to the products within the shelving unit for commercial reasons: As is known in the art, a locking mechanism can be adapted to allow opening of the door upon receipt of an electronic signal, for example from a computer system with a retail module, where the signal is part of the retail sales transaction process, e.g., allowing opening upon swiping of a card or a screen input from a user or cashier. Together with the door **220,** a shelving volume **210** can be enclosed on all four sides.

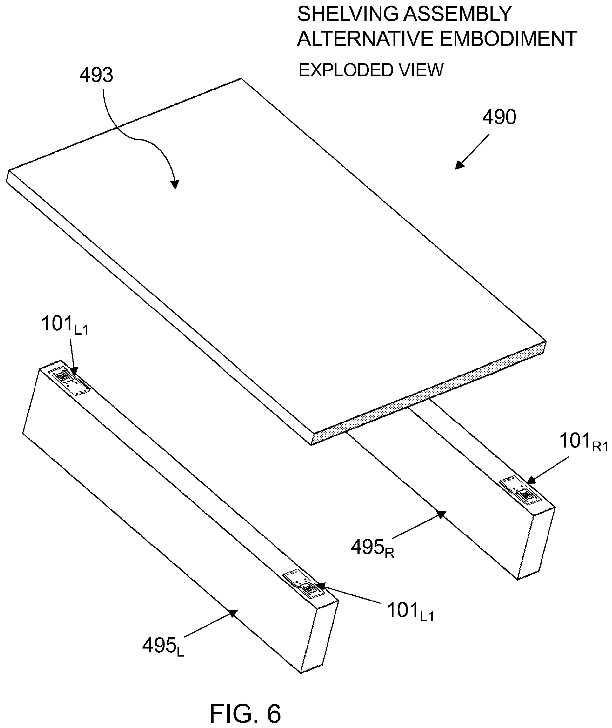

A shelving unit **200** includes at least one shelf assembly **290** of Fig. s 5A and 5B, or shelf assembly **490** of Fig. 6, both of which are further described hereinbelow. In Fig. 4A, five shelf assemblies **290** are shown. The number of shelf assemblies **290** in a shelving unit **200** can be as few as one and as many as practicably can fit in the shelving unit while allowing access for shelf-stockers and customers to the products **70** stocked and displayed thereupon. Products can be stocked and displayed homogeneously, i.e., in groups of identical products taking up part or all of a shelf assembly **290,** or mixed with non-identical products, as illustrated in Fig. 4A by the display on the two lower shelf assemblies **290** of products **70₁**, **70₂**, **70₃** and **70₄**.

Shelf assemblies **290** are attached to one or two or three of left and right walls **281_{L}**, **281_{R}** and back wall **280.** The shelf assembly **290** can be attached directly to any of the walls and preferably is by employing one or more attachment elements **285** such as, for example, the attachment elements **285_{L1}, 285_{L2}, 285_{L3}** in Fig. 4A. In some embodiments attachment elements **285** share similarities with uprights **85** used in open shelving bays, in that each comprises a plurality of attachment elements (e.g., recesses or holes) designed for the easy insertion and removal of shelf bracket hooks along a continuous strip, and are different from uprights **85** in that they are fixedly attached to a side wall **281** or back wall **280** of an enclosed shelving unit **200.** In other embodiments (not shown) attachment elements **285** can be only as large as necessary for having a single attachment arrangement (e.g., recess, hole, peg, hook, etc.) for use by a single shelf, or can have several such attachment arrangements so as to allow flexibility in the height-placement of shelf assemblies **290,** but without having the continuous strip configuration of the attachment arrangements shown in Fig. 4A. The detail inset of Fig. 4A shows a close-up of attachment element **285_{L1}** which includes attachment-element-points **287.** Attachment-element-points **287** are shown as holes, but in other embodiments they can be, for example, protruding members, recesses, or slots, which mate with corresponding attachments points **286.** An attachment element **285** can also include fastening arrangements **288** for fastening the attachment element **285** to a wall **281** of the shelving unit **200.**

Fig. 4A shows three attachment elements **285_{L1}, 285_{L2}, 285_{L3}** on the left wall **281_{L}** of the shelving unit **200,** and a skilled artisan can easily understand that in such an example there can be three corresponding and similar attachment elements **285_{R1}, 285_{R2}, 285_{R3}** on the right wall **281_{R}.** However, this presentation of 3 (or, as can be reasonably extrapolated: 6) attachment elements **285** is by way of illustrative example only, and the actual number of attachment elements **285** and their respective placement is merely a design choice where the design goal is providing sufficient support in the right places for each shelf assembly **290** so that shelf assemblies **290** are substantially immobilized in a horizontal position and maximally resistant to rolling or pitching from forces reasonably applied to any of the parts of the shelf assembly **290.** Such forces can be generated by, for example, uneven distribution of products, employees or customers leaning on or against a shelf assembly **290** or a child pulling himself up by grasping the front edge of a shelf assembly **290.**

In some embodiments, left and right walls **281_{L}**, **281_{R}** can be partial walls or not be present at all, in which case the lack of a front-edge attachment element on the side wall (e.g., **285_{L1}** on the front edge of left wall **281_{L}**), or even no side wall attachment elements, in which the designer can put in additional structural elements for stabilizing and immobilizing the shelf assemblies 290.

As shown in Fig. 4A, shelving unit **200** can include a refrigeration unit **250** for chilling products **70** and keeping them at a desired temperature.

A shelving unit can also include a retail transaction apparatus **230.** A retail transaction apparatus **230** can include any combination of credit card reader, cash and coin slots, and a user interface including, for example, a display screen, and be provided for the purpose of enacting payment for products **70** selected and removed from the shelving unit **200.** The retail transaction apparatus need not be installed on the shelving unit **200** itself and instead can be a distance away, for example, at a cashier's position. In another example, there can be one retail transaction apparatus for a plurality of shelving units **200.**

According to embodiments, a shelf assembly includes a plurality of planar load cell assemblies **101** (not shown in Fig. 4A; shown, e.g., in Fig 5B) which track the weight of products on the shelf assemblies **290,** as well as changes in the weight, e.g., from the addition of products **70** on the shelf assembly **290** or the removal of products on the shelf assembly **290.**

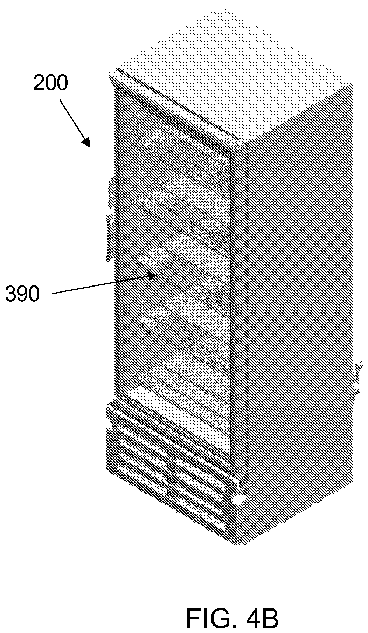

Fig. 4B shows an example of a shelving unit **200** similar in function to that of Fig. 4A but definitively configured as a display refrigerator. To ensure adequate internal airflow, shelf assemblies **390** can be provided with open spaces horizontal surfaces so as to be at least partly open for a vertical airflow.

Referring now to Figs. 5A and 5B, an example of a shelf assembly **290** according to an embodiment is shown in both assembled and exploded views. A shelf assembly **290** is a type of weighing assembly that comprises a weighing base **299** and a shelf or shelf tray **291.** The weighing base **299** can comprise a shelf base **295** and a plurality of load cell installation assemblies **101.** In this example four load cell installation assemblies **101_{L1}**, **101_{L2}** (not shown, blocked by shelf tray **291**), **101_{R1}**, **101_{R2}** are provided, but a higher or lower number of load cell installation assemblies can be provided while meeting the design goal of providing accurate weight indications of products **70** on a shelf assembly **290** or added thereto or removed therefrom. Thus, load cell assemblies **101** can be attached (by screw or rivet or any other appropriate attaching method) and, in this way, complete the installation of the load cell installation assemblies on the weighing base **299.**

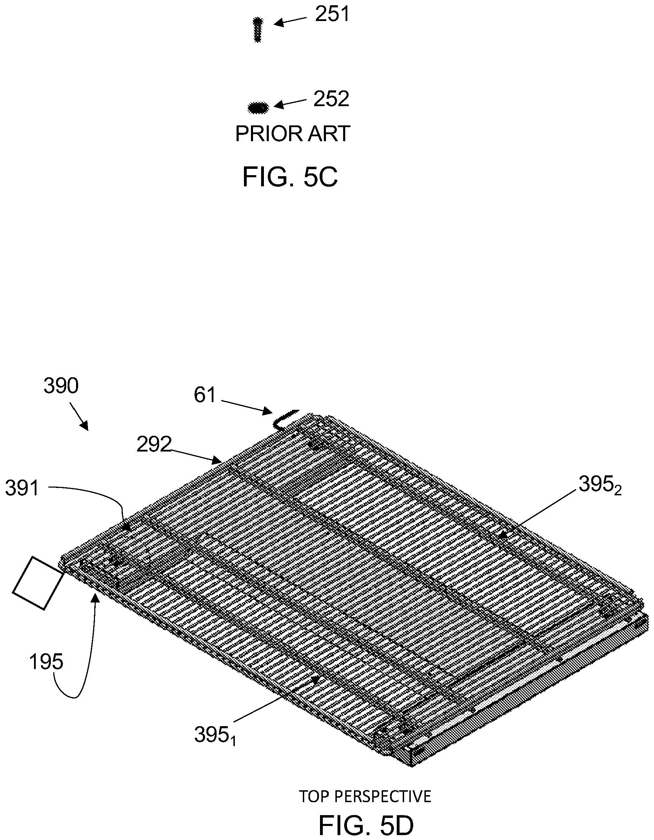

The shelf tray **291** can include a receiving bracket (not shown) for securing and stabilizing a shelf tray **291** on a weighing base **299.** In some embodiments a shelf tray **291** can be attached in other ways to a weighing bracket **299.** A plurality of prior-art protruding elements **251** and a plurality of joining elements **252** (shown in Fig. 5C) vertically aligned with respective protruding elements **251** for receiving the respective protruding elements **251** can be provided for transferring load to the load cell assemblies **101.** It should be noted that the number of respective protruding elements **251** and joining elements **252** will be the same as the number of load cell assemblies **101** for any given shelf assembly **290.** For, example, in the non-limiting example shown in Fig. 5B, the number of load cell assemblies **101** is four, and thus four respective protruding elements **251** and four joining elements **252** are used.

As mentioned in the preceding paragraph, the protruding elements **251** together with the joining elements **252,** can function to transfer load (the weight of the shelf tray **291** and of products **70** displayed thereupon) to the load cell assemblies **101.** In some embodiments the protruding elements **251** can transfer the load directly by having a lower end positioned in a receptacle in the load cell assembly **101,** and in other embodiments the protruding elements function to ensure the positioning of the joining elements **252** around the holes **140** (in Fig. 4A) on the load cell assemblies **101** so as to transfer the load to the load cell assemblies **101** via the joining elements **252.** They can also function to inhibit movement of the aforementioned receiving bracket (not shown) or of the shelf tray **291** in the horizontal plane, for example by being installed in or through the holes **140** in respective load cell assemblies **101.** In some embodiments, protruding elements **251** and joining elements **252** can be threaded (e.g., a threaded bolt and respective nut) and in other embodiments they can be unthreaded (e.g., a simple bolt and respective washer). In some embodiments both a threaded nut and a washer may be provided. A protruding element **251** can be deployed in any one of a number of approaches. For example, a protruding element **251** can be disposed on a receiving bracket. As another example, a protruding element **251** can be disposed on joining element **252.** As yet another example, a protruding element **251** can be disposed on the shelf tray **291** (preferably flush with the upper surface of the shelf tray **251**), the respective joining element **252** holding it in its place on the shelf tray **291.** In another example, not shown, a weight distributor in the form of a button or disk can be provided to transfer load to joining element **251.**

It should be noted that use of the term 'shelf tray' should not be taken to literally mean a tray, e.g., as illustrated in the non-limiting example of Figs. 5A and 5B wherein shelf tray **291** includes tray rim **292.** Front flange **294** of shelf tray **291** is optional and has both aesthetic and functional purposes, e.g., obscuring the shelf base **295,** the load cell installation assemblies **101** and the miscellaneous elements that might be provided for attachments. In other embodiments, shelf tray **291** can be flat without a tray rim **292,** and if additional structural support is necessary for the shelf tray **291,** e.g., to resist twisting or bending, it is possible to apply other engineering solutions for strengthening the structure.

Still referring to Figs. 5A and 5B, a shelf assembly **290** can comprise attachment arrangements or points **286** which mate with attachment elements **285** of side walls **281** and/or back wall **280** of shelving unit **200.** If attachment elements **285** comprise holes or recesses, then attachment points **286** can comprise protruding members such as hooks or knobs or similar, and vice versa - if attachment elements **285** comprise protruding members such as hooks or knobs, then attachment points **286** can comprise corresponding recesses or holes. Shelf assembly **290** preferably extends from left wall **281_{L}** to right wall **281_{R}** such that attachment points on the two sides can mate with attachment elements **285** or attachment components **289** that are joined to the attachment elements **285.** In some embodiments, shelf assembly **290** has a width that is at least 80% or at least 90% or at least 95% of the distance between left wall **281_{L}** and right wall **281_{R}.** According to embodiments, there is only a single shelf assembly **290** at any given height in shelving unit **220.**

We now refer to Figs. 5D-F.

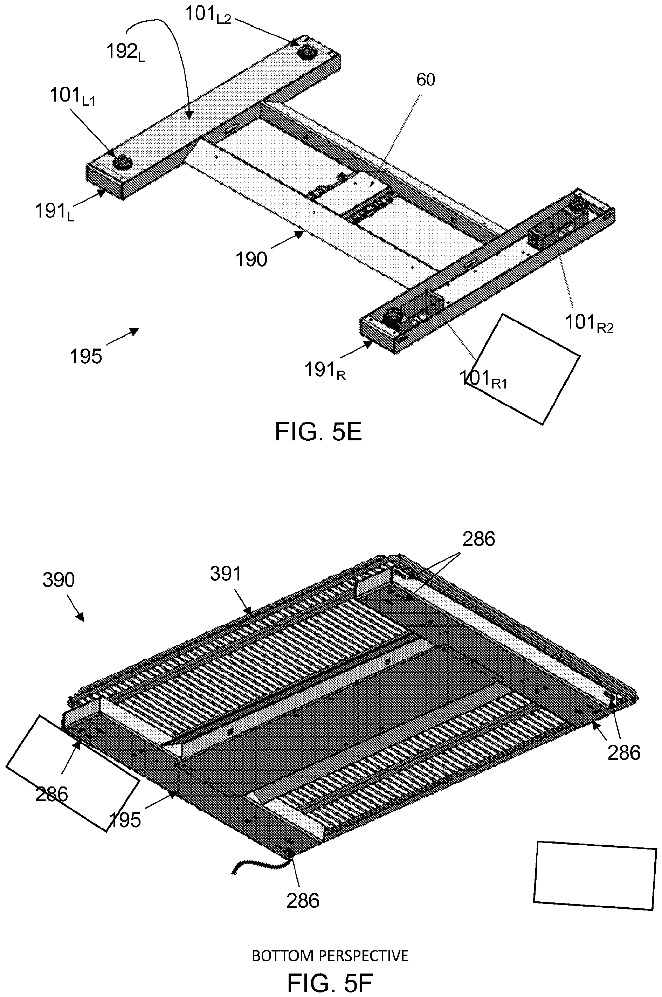

A shelf assembly **390** for a refrigerator includes a weighing base **195** and a shelf **391.** The shelf **391** can include a peripheral rim **292** to reduce the likelihood that a product leans against the internal wall of the refrigerator **200,** which would reduce the force measurable on the shelf **391.** Weighing base **195** includes opposing load-cell bases **191_{L}, 191_{R}** detachedly attachable to respective left and right internal walls of the refrigerator. As shown in Fig. 5F, the bottom of the weighing base **195** (and therefore the bottom of the shelf assembly **390**) includes attachment arrangements **286.** Each of the load-cell bases **191** includes a plurality of load cells **101** (of any type, not necessarily planar load cells). Thus, there are at least two load cells **101** on each side, or at least 4 load cells for each weighing base **195.** The two load-cell bases **191** are joined to form a rigid, e.g., stable, resistant to twisting, and/or not flexible, frame. A single-member beam 190 is shown as joining the two load-cell bases **191** but any appropriate design and number of left-to-right beams can be used. The beam can be used to support electronic communication arrangements **60,** for example transmitted via a communications channel **61,** as shown in Fig. 5E. In some embodiments, the load-cell bases **191** and/or the beam are covered with covers **192.** It can be desirable for the weighing base **195** to allow at least a minimum amount of vertical airflow to flow freely within the interior of the refrigerator/shelving unit **200,** and for this purpose a portion of the horizontal surface of the weighing base **195** can be 'open' to a vertical airflow, the term 'vertical' meaning any airflow within the refrigerator, which in many implementations is vertical or predominantly vertical, e.g., within ±10° of vertical, or within ±20° of vertical, or within ±30° of vertical, or within ±40° of vertical, or within ±45° of vertical. Preferably, at least 25% of the horizontal surface area of the weighing base **195** to vertical airflow, or at least 30%, or at least 35%, or at least 40%, or at least 45%, or at least 50%. In some embodiments, as much as 80% or as much as 70% or as much as 60% of the horizontal surface area of the weighing base **195** can be open to vertical airflow.

The horizontal area of the shelf **391** is also at least partly open to vertical airflow. In embodiments, the horizontal surface area of the shelf **391** can be at least 40% open or at least 50% open or at least 60% open or at least 70% open or at least 80% open or at least 90% open. In embodiments, the shelf **391** can utilize a wire grid design. A wire grid design is mostly open, and airflow passing through the open horizontal areas of the weighing base **195** is not be substantially blocked by the wires of the grid, which generally create minor turbulence as the air passes therethrough without a substantial pressure drop. In some embodiments, a wire-grid shelf can include both thinner wires, e.g., front-to-back wires deployed across the shelf **391** for supporting products, and thicker wires, e.g., left-to-right wires for structural support. As shown in Fig. 5D, left-to-right wires **395** are spaced so as to transmit force, e.g., the weight of the shelf and of products displayed thereupon, to the load cells assemblies **101** in the load-cell bases **191.** Thus, the load cell assemblies **101** mediate between the weighing base **195** and the shelf **391,** and the shelf **391** does not sit directly on the weighing base **195** or on the cover **192.** The left-to-right wires **395** are illustrated in Fig. 5E as being thicker than the front-to-back wires, but in other examples they can all be the same thickness and weight. The skilled artisan will understand that a selection criterion for the left-to-right wires is sufficient rigidity, e.g., resistance to twisting, sagging, etc.

Reference is now made to Fig. 6, in which another embodiment of a shelf assembly **490** is shown. Respective left and right weighing bars **495_{L}, 495_{R}** are provided as fixed attachments to left and right side-walls **281_{L}**, **281_{R}** of shelving unit **200.** Obviously, there can be multiple pairs of weighing bars provided in a single shelving unit **200** - one for each shelf assembly **490** desired to be installed in the shelving unit **200.** Each weighing bar comprises a pair of load cell installation assemblies **101.** The shelf assembly **490** further comprises a shelf tray **493,** which can be attached to the respective left and right weighing bars **495_{L}, 495_{R}** by a receiving bracket (now shown) or by other fastening methods known in the art. Protruding elements **251** and receiving elements **252** can be used here in the same manner as in the embodiment illustrated in Fig. 5B.

The embodiments illustrated in Figs 3a-3b, 5A-5B and in Fig. 6 are diverse, non-limiting examples of weighing-enabled shelving units and shelf assemblies and do not exhaust the possibilities of a retail display and sales system suitable for use with the present invention. For example, in other embodiments (not illustrated), weighing bars can be deployed in a direction that is orthogonal to the direction of the weighing bars **495** in Fig. 6, such that they each extend from the left wall of a shelving unit to the right wall, one such 'transverse' weighing bar proximate to the back wall and secured either to the back wall or to the two side walls, and the other 'transverse' weighing bar proximate to the front of the shelf assembly **490** and secured at both ends to the two side walls.

### Retailing system block diagrams

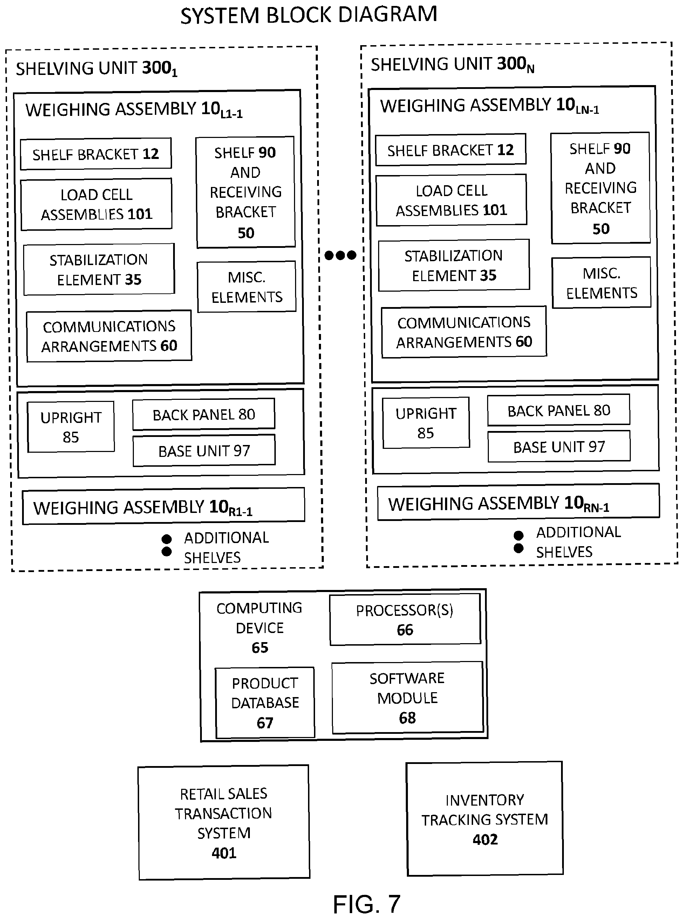

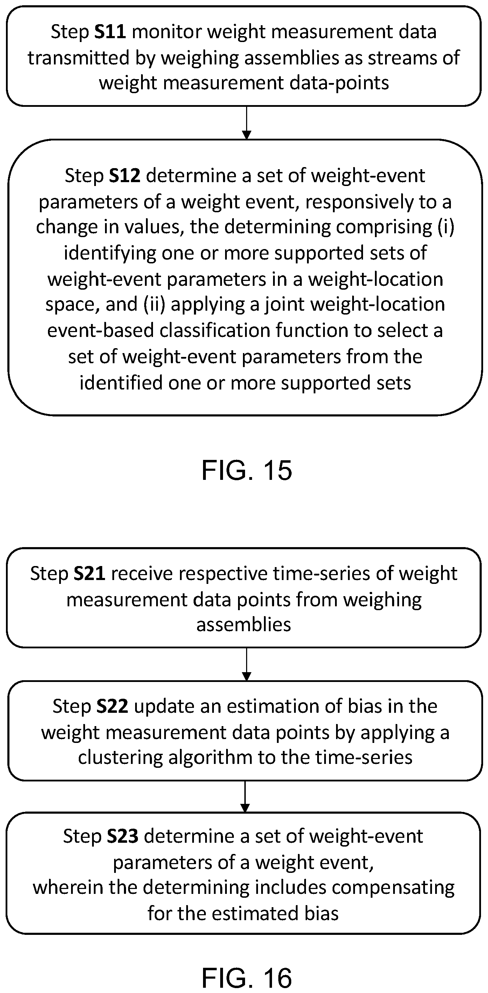

Fig. 7 includes a block diagram showing details of a system for executing unattended retail sales transactions and/or tracking inventory of products, using, for example, embodiments of weighing assemblies and shelving arrangements disclosed with respect to Figs. 2B, 3A and 3B. Such a system includes one or more shelving units **300₁** .. **300_{N},** each of which can include any of the weighing assembly features shown. Each shelving unit include a number of shelves **90,** each supported by a left-and-right pair of weighing assemblies **10** including shelf brackets **12.** Each pair of weighing assemblies **10** includes a weighing assembly **10** for supporting a different end of the shelf **90.** As an example, weighing assemblies **10_{L1-1}** and **10_{R1-1}** are respective the left and right assemblies for support a first shelf **90₁₋₁** in first shelving unit 300₁. Each of the load cell assemblies **101** installed in the system can communicate weight information with computing device **65.** Once computing device **65** determines that a product has been added to or removed from a shelf, and further determines which specific product has been added to or removed from a shelf (as discussed earlier in connection with Fig. 15), then the information can be forwarded to a retail sales transaction system **401** and or an inventory tracking system **402.** Not all of the elements in the block diagram in Fig. 7 need be present in order to practice the invention.

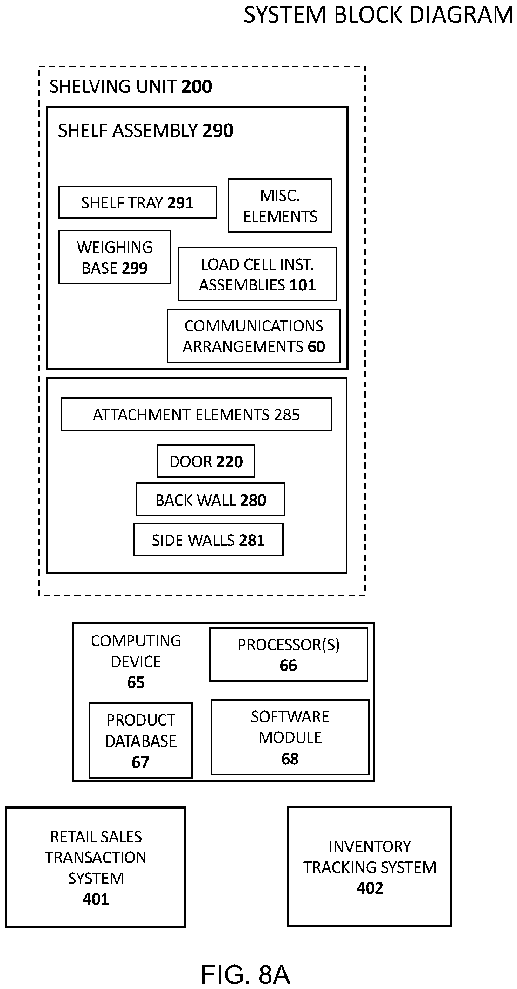

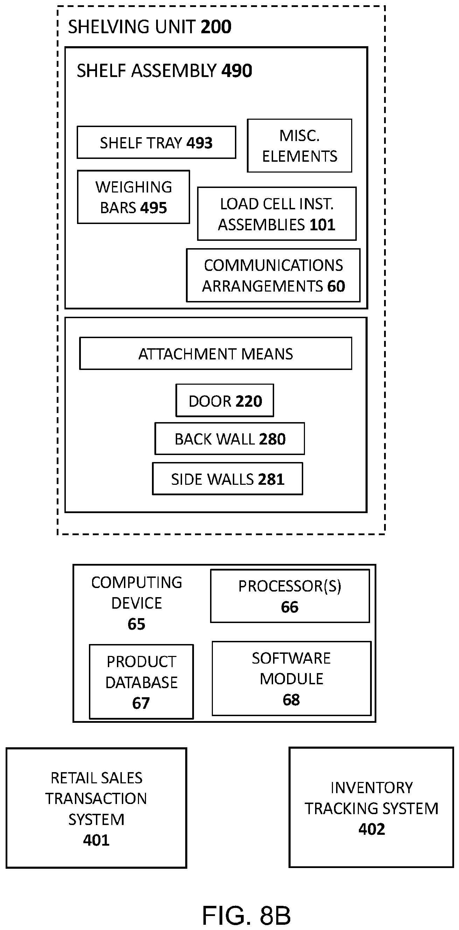

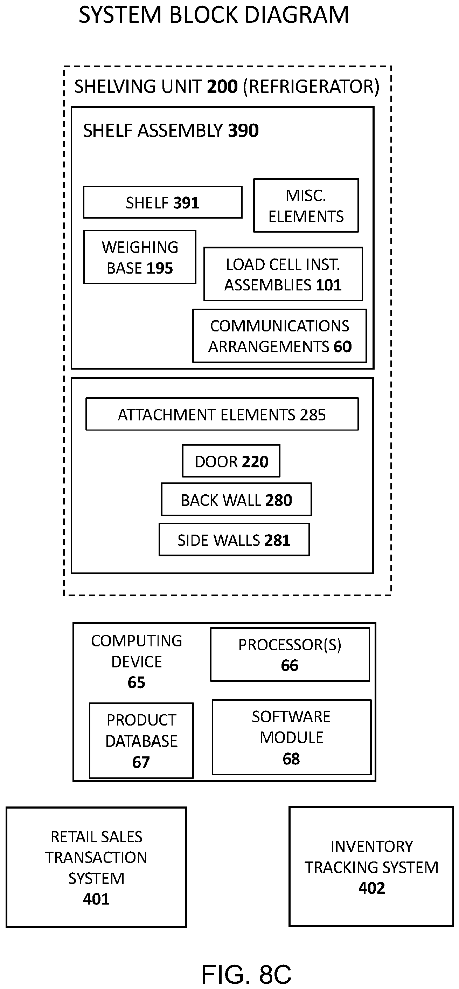

Figs. 8A, 8B and 8C include block diagrams showing details of exemplary systems for executing unattended retail sales transactions and/or tracking inventory of products, using, for example, embodiments of shelving units and shelf assemblies disclosed with respect to Figs. 4, 5A, 5B and 6. Such a system includes a shelving unit **200,** which can include any of the shelving unit features shown. Each shelving unit includes a number of shelf assemblies **290,** or alternatively, shelf assemblies **490** as discussed above with respect to Fig. 6.

Each shelf assembly **290** includes shelf tray **291,** weighing base **299,** load cell installation assemblies **101,** communications arrangements **60** by which the processors of load cell assemblies can communicate weight information with other system elements, and miscellaneous mechanical elements.

Each shelf assembly **490** includes shelf tray **493,** weighing bars **495_{L}** and **495_{R},** load cell installation assemblies **101,** communications arrangements **60** by which the processors of load cell assemblies can communicate with other system elements, and miscellaneous mechanical elements.

Each shelf assembly **390** includes shelf **391,** weighing base **195,** load cell installation assemblies **101,** communications arrangements **60** by which the processors of load cell assemblies can communicate with other system elements, and miscellaneous mechanical elements. In some embodiments (not shown in Fig. 8C) the shelf assembly **390** can include a weighing-base cover.

Each of the load cell assemblies **101** of load cell installation assemblies **101** can communicate weight information with computing device **65.** Once computing device **65** determines that a product has been added to or removed from a shelf, and further determines which specific product has been added to or removed from a shelf, then the information can be forwarded to a retail sales transaction system **401** and or an inventory tracking system **402.** It will be appreciated by those of skill in the art that not all of the elements in the block diagram in Fig. 8 need be present in order to practice the invention.

Methods for practicing embodiments of the present invention are disclosed in the following sections.

### Discussion of a first method

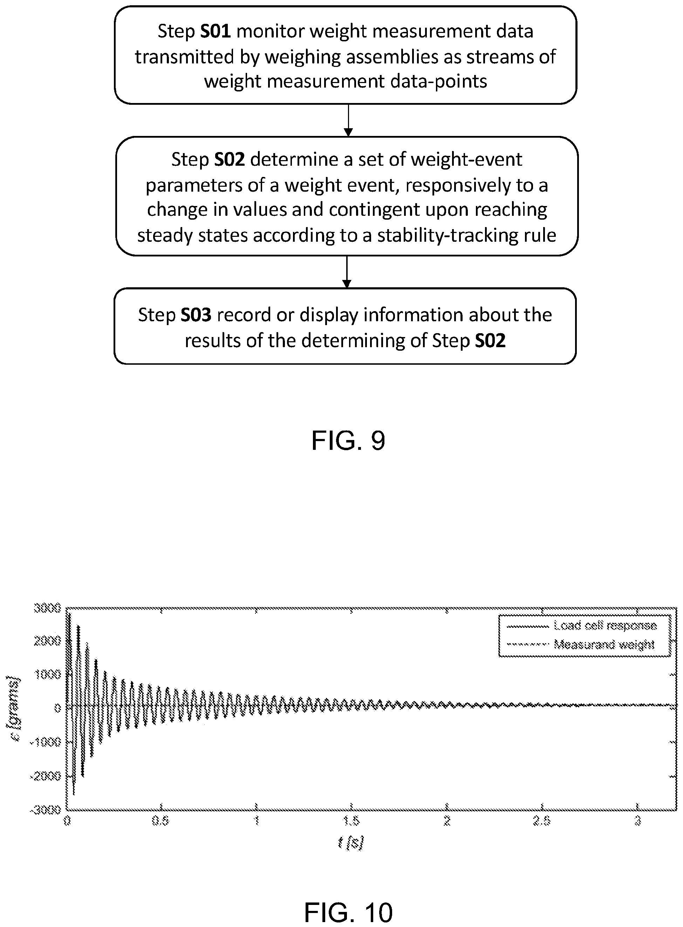

A first method for conducting a retail transaction using a plurality of weighing assemblies that are jointly operable to measure the combined weight of the shelf and of products arranged thereupon according to embodiments, is now disclosed. The method is suitable for use with any of the embodiments of weighing assemblies and shelving arrangements disclosed herein. As shown in the flowchart in Fig. 9, the method comprises:
Step **S01,** monitoring weight measurement data transmitted by weighing assemblies as streams of weight measurement data-points. The weight measurement data correspond to the shelf **90** (or, equivalently, shelf **290** or shelf **490**) and to a plurality of non-homogeneous products **70** arranged thereupon. The weight measurement can include voltage measurements generated by load cells of the weighing assemblies **101;** as is known in the art, as the spring element of a load cell deforms, the cell's strain gauges also change shape. The resulting alteration to the resistance in the strain gauges can be measured as voltage. In some embodiments, a change in voltage is transmitted. In some embodiments, an estimated voltage-to-gram conversion factor is applied at each of the load cell assemblies **101,** producing a first-order estimation of the reaction force of each load cell, i.e., the force in reaction to the force applied by the weight of the shelf and products. Thus, it is possible to transmit the reaction force, or an estimated/calculated weight, from each weighing assembly - instead of the voltage data points or in addition thereto. In embodiments, the weight measurement data-points (whether weights and/or voltage inputs thereto) are the only sensor-generated data received during the conduct of the transaction, i.e., the eventual identification of the product(s) and respective product-event(s) of a weight-event is made on the basis of the transmitted weight measurement data but no other sensor data, whether from optical sensors (imaging devices), piezoelectric sensors, radar or lidar sensors, etc.

Step **S02,** determining a set of weight-event parameters of a weight event, responsively to a change in values and contingent upon reaching steady states according to a stability-tracking rule. In some embodiments, a steady state is a state in which, following a transient period, weight measurement data are constant or 'nearly' constant according to a threshold defining 'nearly'. Depending on load cell design, shelf design and other factors, the transient period can be up to a second in length, or up to 5 seconds in length, or up to 10 seconds in length, or even longer. In some embodiments, it can be desirable to define the steady state in accordance with one or more stability-tracking rules. A stability-tracking rule according to embodiments is a rule that governs when the weight measurement data points have adequately reached a 'steady state' condition under which a determination of weight-event parameters of a weight event can take place. For example, it can be desirable to define a stability-tracking rule that includes: 'steady state is reached N seconds after the peak response to a weight-event.' As another example, it can be desirable to define a stability-tracking rule that includes the following: 'respective steady states for the streams of weight measurement data-points are defined by respective response-amplitude thresholds.' As is known in the art, the dynamic response to a weight-event, after an initial 'shock,' can have a long dying 'tail' of ever-decreasing minimal oscillation about a mean, e.g., if visualized, as in the schematic and illustrative example in Fig. 10, on cartesian axes where the x-axis represents time and the y-axis represents response amplitude. The mean (of a reaction force/weight or of a voltage input thereto) can be easily discernible as the oscillation continues to decrease, and at some point in time there is little additional precision to be gained by waiting for the dynamic response to stop oscillating completely. Thus the stability-tracking rule can be based on a height of the oscillation, i.e., above the mean, reaching a threshold. Examples of suitable thresholds include absolute thresholds (e.g., in grams) and relative thresholds (e.g., as a percentage of the mean).

In some embodiments, applying a stability tracking rule includes estimating bias in the weight measurement data-points and compensating for the estimated bias. The compensation can include cancellation of the bias. As an example, a time-series clustering algorithm can be applied to the received streams of weight measurement data-points in order to identify and quantify bias in the data-points. The results can be compared with historical, i.e., learned and/or stored bias data, and the historical bias data can be updated accordingly so as to create an updated bias estimation.

The purpose of the determining in Step S02 is to produce a deterministically identified set of weight-event parameters that can most reliably be associated with a weight-event and subsequently used for a retail transaction in respect of the weight event. In other words, the 'determining' functionality, which receives no real-time sensor-generated information other than weight measurement data-points, is tasked to retroactively identify 'what happened' when a non-transient change in weight on the shelf is detected. A set of weight-event parameters includes a pairing of a product and a product-action respective of the product, i.e., one of: a removal of a product from a shelf, addition of a product to a shelf, or a displacement of a product from one location on a shelf to another location on the shelf. If the product is moved from one shelf to another, it would be modeled as a removal from the first shelf and an addition to the second shelf. The determining includes identifying one or more supported sets of weight-event parameters in a weight-location space. This typically involves using a regression model to preliminarily estimate the location of the removed/added/moved product based on the estimated reaction forces which emanate from embodied by the weight measurement data-points (and/or changes therein). For example, the regression model can be a linear regression model; in other non-limiting examples other regression models can be used, e.g., a binomial regression model. The preliminary location estimation can be refined using statistical inference.

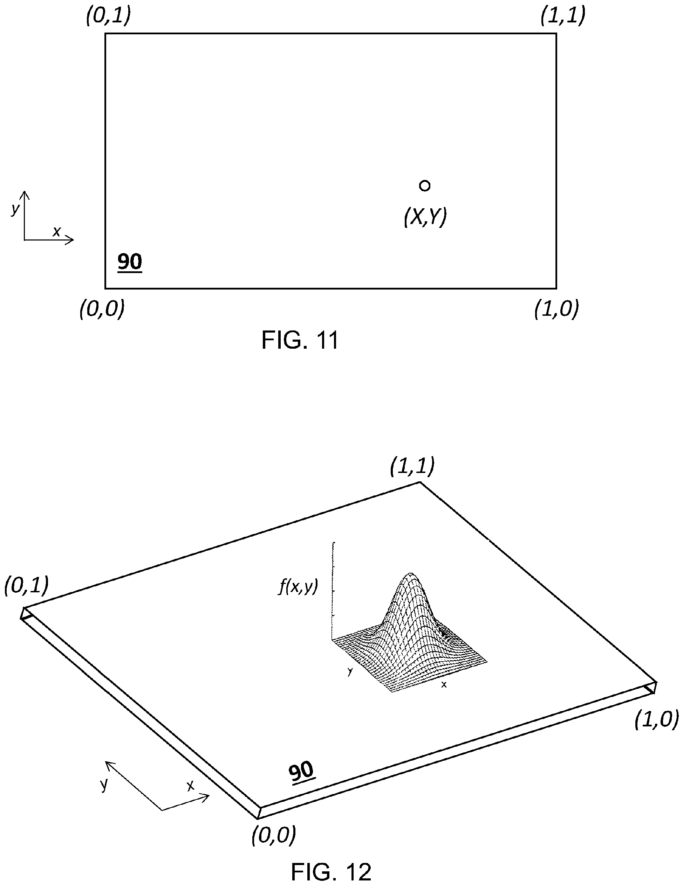

In an example illustrated in Fig. 10, a shelf 90 defines *an x-y* plane having an origin at (0,0) and the diagonally opposite corner at (1,1). A product with weight of W and weight-center coordinates of (X,Y) is removed from the shelf. Theoretically, given a perfect, uniform and balanced shelf 90, no bias, drift or noise, and fully calibrated voltage-to-weight factors, then weighing assemblies (not shown) at *(0,0), (0,1),* (1,1), *(1,0)* could transmit respective weight measurement data points showing respective decreases in reaction forces/weight of (1-*X*)*(1-*Y*)**W,* (1-*X*)**Y***W*,*X***Y* W, X**(1-*Y*)**W.* In other words, the weight would be linearly distributed to the respective weighing assemblies and the total sum of the calculated reaction forces would be *W*. However, because of the myriad factors affecting reaction forces at the weighing assemblies affecting the predictability of weight measurements, it is more realistic to see weight-location as a probability density function, as shown schematically in Fig. 12 solely for visualization purposes, where the weight decrease from the product removal at (*X*,Y) is represented as a mapped weight distribution at multiple *(x,y)* points. The bivariate probability density function shown in Fig. 12 is shown solely as an illustrative example; other suitable probability density functions are discussed hereinbelow.

The weight of the product removed/added/moved, according to embodiments, is estimated by aggregating the estimated reaction forces, where each reaction force at a specific weighing assembly is a product of a voltage input and an estimated voltage-to-weight conversion factor. Weight and location estimations can be iteratively improved, i.e., improved weight information can be used to improve location data, and improved location data can be used to improve weight information. The estimation/improvement iterations can be continued until a 'stop' criterion is met, e.g., iteration-over-iteration change reaches a threshold. At that point, a probability density estimation using historical weight data for products, and/or product positioning plan data and/or other external product data as available, can be used to posit a joint weight-location probability density function, and to create an ad hoc group of 'supported' event sets in the weight-location space of the post-weight-event shelf. The inventors have found, non-exhaustively, that Gaussian Mixture models, Multinomial Models, Piecewise-Uniform distribution models, Multivariate Beta distribution models and Multivariate Gamma distribution models are suitable for use in modeling joint weight-location probability density functions according to the disclosed embodiments; other probability models as known in the art can also be suitable. 'Supported' event sets are those which meet a minimum likelihood criterion for product weight and location. A joint weight-location event-based classification function can be used to select a single set of weight-event parameters from the identified one or more supported sets, and this single set is the 'determined' set of weight-event parameters.

In light of the operating requirement in Step S02 that the determining is contingent upon the system reaching a steady state in accordance with a stability-tracking rule, it can become necessary to 'disambiguate' or 'discretize' multiple discrete weight-events which can make up what appears to be a single weight-event, and this is handled by the joint weight-location event-based classification function. In a first example, a user/customer removes two products that are two items with the same SKU identifier - simultaneously, e.g. two cans of soda with one hand, or sequentially, where the second product is removed before the system reaches steady-state following the first removal. Although the two products share the same SKU identifier, the weights can be different to the extent that the learned/stored history of weight distribution for that SKU indicates a historical range of product weight. In a second example, the two simultaneously or sequentially removed products have different SKU-identifiers - and may be known to have the same nominal weights, or alternatively may be known to have different nominal weights. Even if they are known to have the same nominal weights, the history of weight distribution can be different for each product. In a third example, a kilogram of product is removed from the shelf, and the classification function determines whether a single one-kg product was removed, or two (or more) products with total weight of 1 kg were removed. In some examples, the estimation, regression and/or iteration of location information, in combination with the weight estimations as described above can be used for assigning different probabilities to different sets of weight-event parameters.

Step **S03,** recording and/or displaying information about the results of the determining of Step **S02.** The recording is typically required for conducting/completing the retail transaction. The displaying can be used, for example, in indicating to a user/customer a sub-total or total price for a transaction, along with an identification of a product taken from a shelf (while removing products taken from a shelf and returned to a shelf, even if returned to a different shelf.

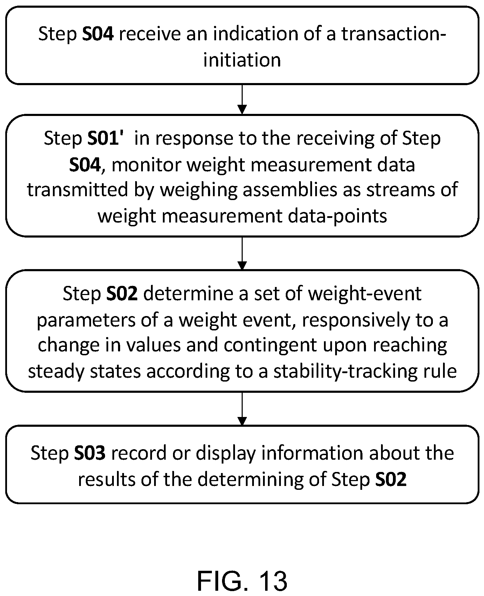

In some embodiments, as shown in the flowchart of Fig. 13, the first method additionally comprises:
Step **S04,** receiving an indication of a transaction-initiation. The indication can include, for example, a physical shock such as from opening and/or closing a door of a retail unit (e.g., retail unit **200** of Fig. 4A or Fig. 4B). The indication can include a sensed movement, such as a hand approaching a shelf, which can be sensed, for example, by an optical sensor or radar or lidar sensor. In some embodiments, the weight-event itself can be the transaction-initiation.

In such embodiments, Step **S01** is replaced by Step **S01'** in which the monitoring of weight measurement data transmitted by weighing assemblies as streams of weight measurement data-points is in response to the receiving of Step **S04.**

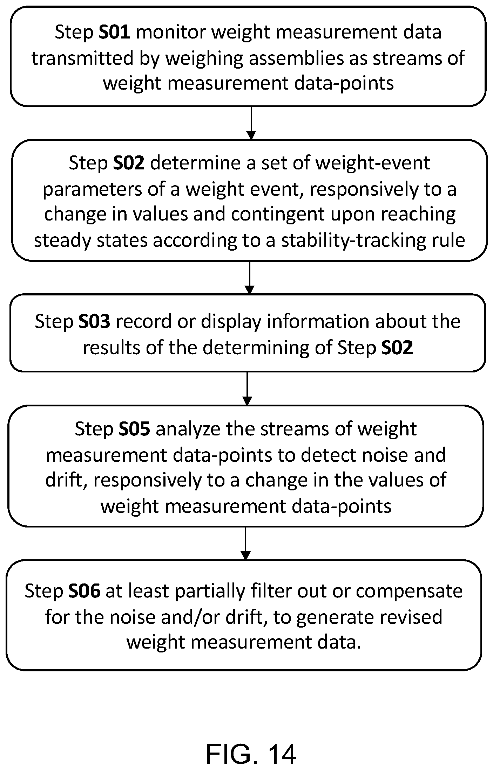

In some embodiments, as shown in the flowchart of Fig. 14, the first method additionally comprises, in addition to Steps **S01 .. S03:**
Step **S05,** responsively to a change in the values of weight measurement data-points, analyzing the streams of weight measurement data-points to detect noise and drift. The weight measurement data-points and the changes in their value over time are analyzed for the presence either or both of the two anomalous phenomena of noise and drift. Noise for the purposes of this disclosure comprises high-frequency, i.e., short-lived, changes in values of weight measurement data points in a stream of such data points transmitted by the weighing assemblies. For example, noise can include spikes in value, which can be either 'plus' or 'minus' with respect to the baseline values, and which are substantially reversed (meaning at least 80% reversed, at least 90% reversed, at least 95% reversed, or at least 99% reversed) within less than 10 seconds after the spike begins, or within less than 5 seconds or within 1 second after the spike begins. In some embodiments, the source of noise can be mechanical and/or environmental. For example, noise can be caused by the vibration of an air conditioning condenser. Noise can be caused by simple mechanical events, such as a customer or employee touching a shelf or a product on the shelf. Opening and closing a door of a retail unit can be consider noise in some embodiments. Drift for the purposes of this disclosure is a low-frequency, i.e., long-lived, change in weight measurement values, usually changes that are relatively minor in magnitude. Examples of causes of drift are daily cycles of indoor temperatures, environmental conditions such as humidity and atmospheric pressure, and artifacts of a power supply. Unlike what is termed herein noise, drift is not quickly reversed, because it is generally caused by a persistent and/or repeating condition. In some embodiments, drift is periodic; for example, the same pattern or trend can repeat itself every day at a certain time, or at the start of every work shift, or even in on an annual cycle in line with seasonal changes in the environment.

Step **S06,** in response to detection of noise and/or drift in Step **S05,** at least partially filtering out or compensating for the noise and/or drift, and thus generating revised weight measurement data. Noise and/or drift can mask true changes in weight embodied in the values of the weight measurement data points. Noise and/or drift can also affect the resolution and disambiguation of products and actions (weight-event parameters) by adding uncertainty and skewing probabilities. Therefore, it can be advantageous to filter out, or compensate for, noise and/or drift, at least partially. As is known in the art, a signal can commonly be decomposed into its component frequencies using a Fourier transform. Carrying out this step results in revised weight measurement data that can be generated as a result of the filtering out and/or compensating for noise and drift.

In embodiments, Step **S04 and S01'** can be combined with steps **S02, S03, S05 and S06.**

### Discussion of a second method

A second method for conducting a retail transaction using a plurality of weighing assemblies that are jointly operable to measure the combined weight of the shelf and of products arranged thereupon according to embodiments, is now disclosed. The method is suitable for use with any of the embodiments of weighing assemblies and shelving arrangements disclosed herein. As shown in the flowchart in Fig. 15, the second method comprises:
Step **S11,** monitoring weight measurement data transmitted by weighing assemblies as streams of weight measurement data-points. Step **S11** is identical to Step **S01,** and the discussion of Step **S01** applies as well to Step **S11.**

Step **S12,** determining a set of weight-event parameters of a weight event, responsively to a change in values in one or more streams of weight measurement data-points, the determining comprising (i) identifying one or more supported sets of weight-event parameters in a weight-location space, and (ii) applying a joint weight-location event-based classification function to select a set of weight-event parameters from the identified one or more supported sets.

The weight of the product removed/added/moved, according to embodiments, is estimated by aggregating the estimated reaction forces, where each reaction force at a specific weighing assembly is a product of a voltage input and an estimated voltage-to-weight conversion factor. Weight and location estimations can be iteratively improved, i.e., improved weight information can be used to improve location data, and improved location data can be used to improve weight information. The estimation/improvement iterations can be continued until a 'stop' criterion is met, e.g., iteration-over-iteration change reaches a threshold. At that point, a probability density estimation using historical weight data for products, and/or product positioning plan data and/or other external product data as available, can be used to posit a joint weight-location probability density function, and to create an ad hoc group of 'supported' event sets in the weight-location space of the post-weight-event shelf. The inventors have found that Gaussian Mixture models, Multinomial Models, Piecewise-Uniform distribution models, Multivariate Beta distribution models and Multivariate Gamma distribution models are suitable for use in modeling joint weight-location probability density functions; other probability models as known in the art can also be suitable. 'Supported' event sets are those which meet a minimum likelihood criterion for product weight and location. A joint weight-location event-based classification function can be used to select a single set of weight-event parameters from the identified one or more supported sets, and this single set is the 'determined' set of weight-event parameters. In some embodiments, applying the joint weight-location event-based classification function includes estimating a joint weight-location probability density.

In some embodiments, wherein applying the joint weight-location event-based classification function applying the joint weight-location event-based classification function includes applying a statistical classification mechanism trained by weight and location information to perform a statistical inference. In some embodiments, applying the classification function includes Bayesian hierarchical modelling, including a Bayesian merge of the joint weight-location probability density function with the group of sets of supported events in the weight-location space.

### Discussion of a third method

A third method for conducting a retail transaction using a plurality of weighing assemblies that are jointly operable to measure the combined weight of the shelf and of products arranged thereupon according to embodiments, is now disclosed. The method is suitable for use with any of the embodiments of weighing assemblies and shelving arrangements disclosed herein. As shown in the flowchart in Fig. 16, the third method comprises:
Step **S21,** receiving respective time-series of weight measurement data points from a plurality of weighing assemblies. As discussed hereinabove, weight measurement data points can include calculated weight measurements and/or voltage inputs thereto. The data points are received simultaneously as separate time-series from each load cell assembly.

Step **S22,** updating an estimation of bias in the weight measurement data points by applying a clustering algorithm to each of the time-series of weight measurement data-points. A 'bias history' can be maintained by the retail transaction system, and the bias history can be updated when encountering identified bias in ongoing transactions. The bias history is available to be updated on the basis of bias identified in Step **S22.** The updating includes identifying bias in the time streams. A preferred method of identifying bias is by using a clustering algorithm. The inventors have found, non-exhaustively, that Gaussian Mixture algorithm, K-means clustering, Hard clustering and a mixture of Beta distributions are suitable clustering algorithms according to the disclosed embodiments.

Step **S23,** determining a set of weight-event parameters of a weight event, wherein the determining includes compensating for the estimated bias. In some embodiments, compensating for the estimated bias includes correcting an estimation of weight and/or location. In some cases, they go together: correcting an estimation of weight can lead to correcting an estimation of location because of the iterative nature of the joint weight-location modeling.

In some embodiments, Step **S23** can include features from Step **S12** in that the determining can comprise (i) identifying one or more supported sets of weight-event parameters in a weight-location space, and (ii) applying a joint weight-location event-based classification function to select a set of weight-event parameters from the identified one or more supported sets.

The third method can additionally include Steps **S05** and **S06,** which were discussed hereinabove in respect of Fig. 14.

### Discussion of a fourth method

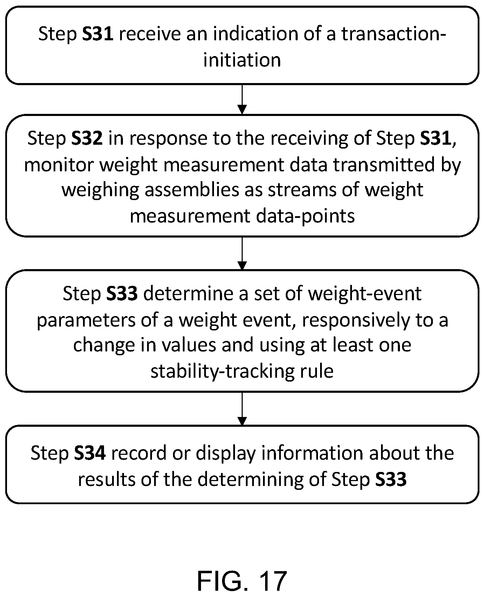

A fourth method for conducting a retail transaction using a plurality of weighing assemblies that are jointly operable to measure the combined weight of the shelf and of products arranged thereupon according to embodiments, is now disclosed. The method is suitable for use with any of the embodiments of weighing assemblies and shelving arrangements disclosed herein. As shown in the flowchart in Fig. 17, the fourth method comprises:
Step **S31** (identical to Step **S04**), receiving an indication of a transaction-initiation. The indication can include, for example, a physical shock such as from opening and/or closing a door of a retail unit (e.g., retail unit **200** of Fig. 4A or Fig. 4B). The indication can include a sensed movement, such as a hand approaching a shelf, which can be sensed, for example, by an optical sensor or radar or lidar sensor. In some embodiments, the weight-event itself can be the transaction-initiation.

Step **S32** (identical to Step **S01'**), in response to the receiving of Step **S31,** monitoring weight measurement data corresponding to the shelf and a plurality of non-homogeneous products arranged thereupon, said weight measurement data transmitted by the plurality of weighing assemblies as respective streams of weight measurement data-points. The weight measurement data correspond to the shelf **90** (or, equivalently, shelf **290** or shelf **490**) and to a plurality of non-homogeneous products **70** arranged thereupon.

Step **S33,** determining a set of weight-event parameters of a weight event, responsively to a change in values and using at least one stability-tracking rule. In some embodiments, Step **S33** can include features from Step **S12** in that the determining can comprise (i) identifying one or more supported sets of weight-event parameters in a weight-location space, and (ii) applying a joint weight-location event-based classification function to select a set of weight-event parameters from the identified one or more supported sets. According to embodiments, the at least one stability-tracking rule is/are can be selected from the following non-exhaustive list of stability-tracking rules:
- a first stability-tracking rule based on tracking a dynamic response of a weighing assembly to said weight event. In some embodiments, this rule can be the same as the stability-tracking rule of Step **S02;**
- a second stability-tracking rule based on a stability attribute of a product;
- a third stability-tracking rule is based on a stability attribute of the shelf;
- a fourth stability-tracking rule is based on tracking a shock response to the transaction-initiation when the transaction-initiation includes a door opening or closing.

Step **S34,** recording and/or displaying information about the results of the determining of Step **S33.** The recording is typically required for conducting/completing the retail transaction. The displaying can be used, for example, in indicating to a user/customer a sub-total or total price for a transaction, along with an identification of a product taken from a shelf (while removing products taken from a shelf and returned to a shelf, even if returned to a different shelf.

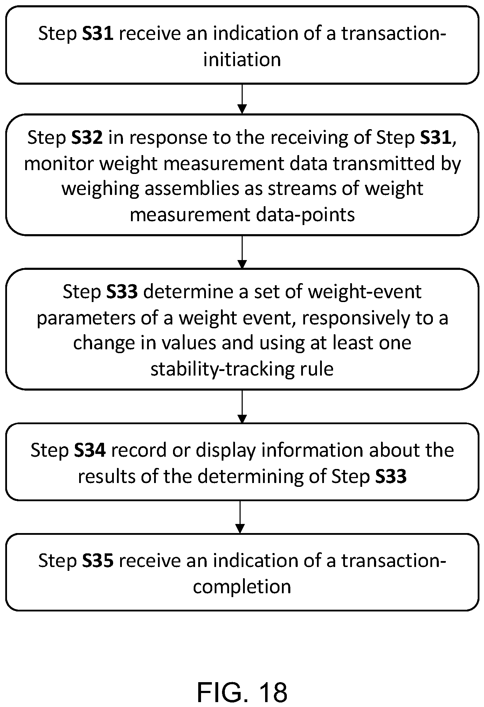

In some embodiments, as illustrated by the flowchart in Fig. 18, the method can comprise, in addition to Steps **S31** .. **S34:**
Step **S35,** receiving an indication of a transaction-completion. In some embodiments a transaction-completion can be inferred from context and circumstances, such as a door closing after a product is removed from a shelf and a predetermined amount of time has passed. In other embodiments, there may be a specific and deliberate transaction-completion, such as receiving payment, scanning a user (biometrically) or a user's transaction card or telephone screen, or simply leaving a store or a specific portion of the store where the shelving unit is located at which the instant transaction is being conducted.

In some embodiments, as shown in the flowchart of Fig. 14, the first method additionally comprises, in addition to Steps **S31 .. S34:**
Step **S36** (identical to Step **S05**), responsively to a change in the values of weight measurement data-points, analyzing the streams of weight measurement data-points to detect noise and drift, as further discussed hereinabove in respect of Step **S05.**

Step **S37** (identical to Step **S06**), in response to detection of noise and/or drift in Step **S36,** at least partially filtering out or compensating for the noise and/or drift, and thus generating revised weight measurement data.

In embodiments, Steps **S36** and **S37** can be combined with steps **S31 .. S35.**

### Discussion of a fifth method

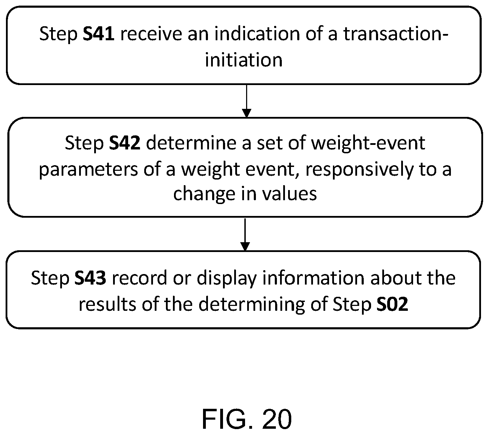

A fifth method for conducting a retail transaction using a plurality of weighing assemblies that are jointly operable to measure the combined weight of the shelf and of products arranged thereupon according to embodiments, is now disclosed. The method is suitable for use with any of the embodiments of weighing assemblies and shelving arrangements disclosed herein. As shown in the flowchart in Fig. 20, the fifth method comprises:

Step **S41** (identical to Step **S04**), receiving an indication of a transaction-initiation. The indication can include, for example, a physical shock such as from opening and/or closing a door of a retail unit (e.g., retail unit **200** of Fig. 4A or Fig. 4B). The indication can include a sensed movement, such as a hand approaching a shelf, which can be sensed, for example, by an optical sensor or radar or lidar sensor. In some embodiments, the weight-event itself can be the transaction-initiation.

Step **S42** determining a set of weight-event parameters of a weight event, responsively to a change in values. In some embodiments, Step **S42** can include features from Step **S12** in that the determining can comprise (i) identifying one or more supported sets of weight-event parameters in a weight-location space, and (ii) applying a joint weight-location event-based classification function to select a set of weight-event parameters from the identified one or more supported sets.

Step **S43** (identical to Step **S03**), recording and/or displaying information about the results of the determining of Step **S42.**

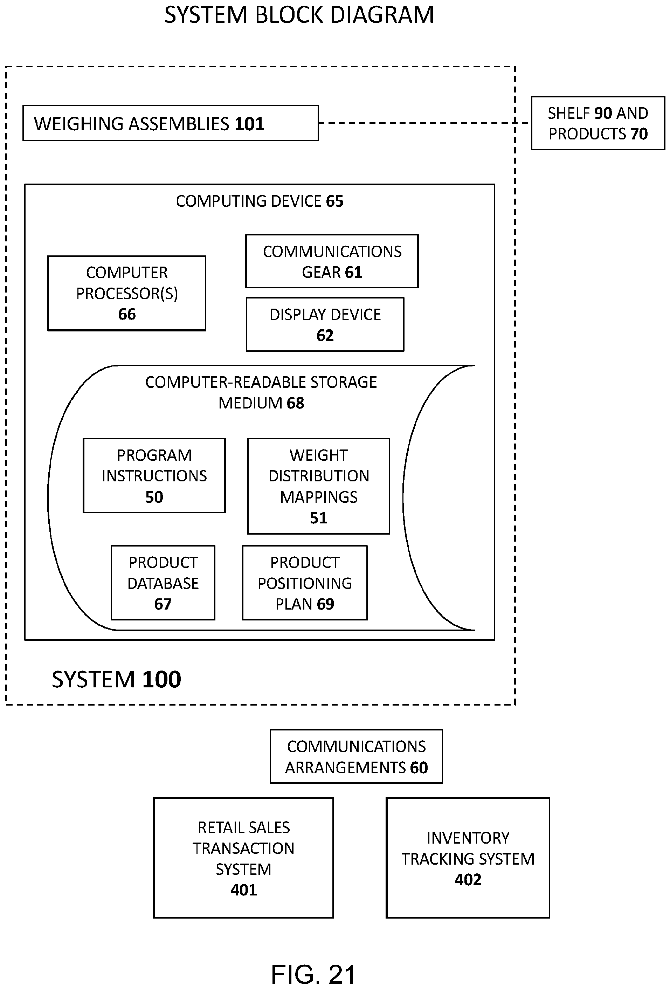

Referring now to Fig. 21, a block diagram is shown of a system for conducting a retail transaction based on weight-events in respect of a non-homogeneous assortment of products **70** on a shelf **90** (or, equivalently, shelf **290** or shelf **490**). The system **100** can include a plurality of weighing assemblies **101** that are in contact with a shelf **90,** which as explained above can support a variety of products **70.** The system can also include one or more computer processors **66** and at least one non-transient computer-readable storage medium **68,** e.g., a mechanical, optical and/or solid-state storage device or a storage device using whatever data storage technology is suitable for the purpose. The one or more computer processors **66** can optionally be included in a computing device **65** that can be a component of the system **100** and which can optionally include other computer hardware such as communications gear **61,** a display device **62,** and user input accessories (not shown), such as a keyboard and a mouse. The storage medium **68** can include program instructions **50,** as well as weight distribution mappings repository **51,** a product database **67** and product positioning plan **69,** all of which are discussed elsewhere in this disclosure.

Program instructions **65,** which when executed by computer processor(s) **66,** are effective to cause the computer processor(s) to carry out any of the methods described hereinabove for conducting a retail transaction using a plurality of weighing assemblies that are jointly operable to measure the combined weight of the shelf and of products arranged thereupon.

Transmissions of electronic signals from weighing assemblies **101** can be received by the one or more computer processors **66,** for example by way of communications gear **61** and used for the purpose of tracking the weights of products **70** on the shelf **90,** and especially of actions taken to products. Communications gear **61** can include any kind of wired or wireless communications arrangements, including, without limitation, direct connections, networked connections and internet connections. Actions include adding a product to a shelf, removing a product from a shelf, and moving a product from one place on a shelf to another. If the moving the product includes lifting the product and putting it back down on the same shelf, it may be interpreted as a removal followed by an adding depending on the speed of the actions and the sampling rate of the weight measurement data, e.g., the number of weight measurement data points per second, as well as any stability-tracking rules applied. On the other hand, sliding a product from one place to another on the shelf might not change, at any given moment, the total weight measured by all of the weighing assemblies associated with a single shelf, but can change the weights measured by each of the individual weighing assemblies.

## Claims

1. A system for conducting a retail transaction, comprising:
a. a plurality of weighing assemblies (101) in contact with a shelf (90) and jointly operable to measure a combined weight of a shelf and of products arranged thereupon;
b. one or more computer processors (66); and
c. a non-transient computer-readable storage medium (68) comprising program instructions, which when executed by the one or more computer processors, cause the one or more computer processors to carry out the following steps:
i. monitoring weight measurement data corresponding to the shelf and a plurality of non-homogeneous products arranged thereupon, said weight measurement data transmitted by the plurality of weighing assemblies as respective streams of weight measurement data-points;
ii. responsively to a change over time in the values of said weight measurement data-points and contingent upon said values reaching respective steady states according to a stability-tracking rule, determining a set of weight-event parameters of a weight event, the determined set of weight-event parameters comprising one or more products and a product-action respective of each one of the one or more products; and
iii. performing at least one of: (A) recording information about the results of the determining in a non-transient, computer-readable medium, and (B) displaying information about the results of the determining on a display device,
wherein the weight measurement data-points comprise at least one type of data selected from the group comprising calculated weights and voltage inputs thereto.

2. The system of claim 1, wherein the program instructions, when executed by the one or more computer processors, additionally cause the one or more computer processors to carry out the following step:
receiving an indication of a transaction-initiation,
wherein the carrying out of the monitoring step is in response to the receiving.

3. The system of either one of claims 1 or 2, wherein the stability-tracking rule includes that said respective steady states for the streams of weight measurement data-points are defined by respective response-amplitude thresholds.

4. The system of any one of claims 1 to 3, wherein applying the stability tracking rule includes estimating bias in the weight measurement data-points and compensating for said bias.

5. The system of any one of claims 1 to 4, wherein the weight measurement data-points either comprise voltage inputs or solely comprise voltage inputs.

6. The system of any one of claims 1 to 5, wherein the determining step includes estimating a joint weight-location event-based product classifier.

7. The system of claim 6, wherein estimating the joint weight-location event-based product classifier includes estimating a joint weight-location probability density.

8. The system of claim 6, wherein estimating the joint weight-location event-based product classifier includes applying a statistical classification mechanism trained by weight and location information to perform a statistical inference.

9. The system of any one of claims 1 to 8, wherein the weight measurement data-points are the only inputs to the determining step that are generated by sensors during the transaction.

10. The system of claim 2, wherein the second stability-tracking rule is based on a stability attribute of a product.

11. The system of claim 2, wherein the stability-tracking rule is based on a stability attribute of the shelf.

## Patentansprüche

1. System zum Durchführen einer Einzelhandelstransaktion, umfassend:
a. eine Vielzahl von Wiegebaugruppen (101), die mit einem Regal (90) in Kontakt stehen und gemeinsam betreibbar sind, um ein kombiniertes Gewicht eines Regals und von darauf angeordneten Produkten zu messen;
b. einen oder mehrere Computerprozessoren (66); und
c. ein nichtflüchtiges computerlesbares Speichermedium (68), das Programmanweisungen umfasst, die, wenn sie durch den einen oder die mehreren Computerprozessoren ausgeführt werden, den einen oder die mehreren Computerprozessoren dazu veranlassen, die folgenden Schritte umzusetzen:
i. Überwachen von Gewichtsmessdaten, die dem Regal und einer Vielzahl von darauf angeordneten inhomogenen Produkten entsprechen, wobei die Gewichtsmessdaten durch die Vielzahl von Wiegebaugruppen als jeweilige Ströme von Gewichtsmessdatenpunkten übertragen werden;
ii. als Reaktion auf eine Änderung im Zeitverlauf der Werte der Gewichtsmessdatenpunkte und bedingt dadurch, dass die Werte jeweilige stationäre Zustände gemäß einer Stabilitätsverfolgungsregel erreichen, Bestimmen eines Satzes von Gewichtsereignisparametern eines Gewichtsereignisses, wobei der bestimmte Satz von Gewichtsereignisparametern ein oder mehrere Produkte und jeweils eine Produktaktion jedes von dem einen oder den mehreren Produkten umfasst; und
iii. Vollführen von zumindest einem von Folgenden: (A) Aufzeichnen von Informationen über die Ergebnisse des Bestimmens in einem nichtflüchtigen, computerlesbaren Medium und (B) Anzeigen von Informationen über die Ergebnisse des Bestimmens auf einer Anzeigevorrichtung,
wobei die Gewichtsmessdatenpunkte zumindest eine Art von Daten umfassen, die aus der Gruppe ausgewählt ist, die berechnete Gewichte und Spannungseingänge darin umfasst.

2. System nach Anspruch 1, wobei die Programmanweisungen, wenn sie durch den einen oder die mehreren Computerprozessoren ausgeführt werden, den einen oder die mehreren Computerprozessoren zusätzlich dazu veranlassen, den folgenden Schritt umzusetzen:
Empfangen einer Angabe einer Transaktionseinleitung,
wobei das Umsetzen des Überwachungsschritts als Reaktion auf das Empfangen erfolgt.

3. System nach einem der Ansprüche 1 oder 2, wobei die Stabilitätsverfolgungsregel enthält, dass die jeweiligen stationären Zustände für die Ströme von Gewichtsmessdatenpunkten durch jeweilige Reaktionsamplitudenschwellen definiert sind.

4. System nach einem der Ansprüche 1 bis 3, wobei das Anwenden der Stabilitätsverfolgungsregel Schätzen einer Verzerrung in den Gewichtsmessdatenpunkten und Kompensieren der Verzerrung enthält.

5. System nach einem der Ansprüche 1 bis 4, wobei die Gewichtsmessdatenpunkte entweder Spannungseingänge umfassen oder ausschließlich Spannungseingänge umfassen.

6. System nach einem der Ansprüche 1 bis 5, wobei der Bestimmungsschritt Schätzen eines auf einem gemeinsamen Gewichts-Ort-Ereignis basierenden Produktklassifikators enthält.

7. System nach Anspruch 6, wobei das Schätzen des auf einem gemeinsamen Gewichts-Ort-Ereignis basierenden Produktklassifikators Schätzen einer gemeinsamen Gewichts-Ort-Wahrscheinlichkeitsdichte enthält.

8. System nach Anspruch 6, wobei das Schätzen des auf einem gemeinsamen Gewichts-Ort-Ereignis basierenden Produktklassifikators Anwenden eines statistischen Klassifizierungsmechanismus enthält, der durch Gewichts- und Ortsinformationen trainiert wird, um eine statistische Inferenz zu vollführen.

9. System nach einem der Ansprüche 1 bis 8, wobei die Gewichtsmessdatenpunkte die einzigen Eingänge in den Bestimmungsschritt sind, die durch Sensoren während der Transaktion erzeugt werden.

10. System nach Anspruch 2, wobei die zweite Stabilitätsverfolgungsregel auf einem Stabilitätsattribut eines Produkts basiert.

11. System nach Anspruch 2, wobei die Stabilitätsverfolgungsregel auf einem Stabilitätsattribut des Regals basiert.

## Revendications

1. Système pour réaliser une transaction au détail, comprenant :
a. une pluralité d'ensembles de pesage (101) en contact avec une étagère (90) et servant conjointement à mesurer un poids combiné d'une étagère et de produits disposés sur celle-ci ;
b. un ou plusieurs processeurs informatiques (66) ; et
c. un support de stockage non transitoire lisible par ordinateur (68) comprenant des instructions de programme, qui, lorsqu'elles sont exécutées par les un ou plusieurs processeurs informatiques, amènent les un ou plusieurs processeurs informatiques à effectuer les étapes suivantes :
i. la surveillance de données de mesure de poids correspondant à l'étagère et à une pluralité de produits non homogènes agencés sur celle-ci, lesdites données de mesure de poids étant transmises par la pluralité d'ensembles de pesage en tant que flux respectifs de points de données de mesure de poids ;
ii. en réponse à un changement dans le temps des valeurs desdits points de données de mesure de poids et sous réserve que lesdites valeurs atteignent des états stables respectifs selon une règle de suivi de stabilité, la détermination d'un ensemble de paramètres d'événement de poids d'un événement de poids, l'ensemble déterminé de paramètres d'événement de poids comprenant un ou plusieurs produits et une action de produit respective de chacun des un ou plusieurs produits ; et
iii. la réalisation d'au moins une action parmi : (A) l'enregistrement d'informations concernant les résultats de la détermination sur un support non transitoire lisible par ordinateur, et (B) l'affichage d'informations concernant les résultats de la détermination sur un dispositif d'affichage,
dans lequel les points de données de mesure de poids comprennent au moins un type de données choisi dans le groupe comprenant des poids calculés et des entrées de tension vers ceux-ci.

2. Système de la revendication 1, dans lequel les instructions de programme, lorsqu'elles sont exécutées par les un ou plusieurs processeurs informatiques, amènent de plus les un ou plusieurs processeurs informatiques à effectuer l'étape suivante :
la réception d'une indication d'une initiation de transaction,
dans lequel le fait d'effectuer l'étape de surveillance est en réponse à la réception.

3. Système de l'une ou l'autre des revendications 1 ou 2, dans lequel la règle de suivi de stabilité comprend le fait que lesdits états stables respectifs pour les flux de points de données de mesure de poids sont définis par des seuils d'amplitude de réponse respectifs.

4. Système de l'une quelconque des revendications 1 à 3, dans lequel l'application de la règle de suivi de stabilité comprend l'estimation d'un biais dans les points de données de mesure de poids et la compensation dudit biais.

5. Système de l'une quelconque des revendications 1 à 4, dans lequel les points de données de mesure de poids comprennent soit des entrées de tension, soit comprennent uniquement des entrées de tension.

6. Système de l'une quelconque des revendications 1 à 5, dans lequel l'étape de détermination comprend l'estimation d'un classificateur de produit basé sur un événement de poids-localisation conjoints.

7. Système de la revendication 6, dans lequel l'estimation du classificateur de produits basé sur un événement de poids-localisation conjoints comprend l'estimation d'une densité de probabilité de poids-localisation conjoints.

8. Système de la revendication 6, dans lequel l'estimation du classificateur de produit basé sur un événement de poids-localisation conjoints comprend l'application d'un mécanisme de classification statistique entraîné par des informations de poids et de localisation pour réaliser une inférence statistique.

9. Système de l'une quelconque des revendications 1 à 8, dans lequel les points de données de mesure de poids sont les seules entrées de **l'étape** de détermination qui sont générées par des capteurs pendant la transaction.

10. Système de la revendication 2, dans lequel la seconde règle de suivi de stabilité est basée sur un attribut de stabilité d'un produit.

11. Système de la revendication 2, dans lequel la règle de suivi de stabilité est basée sur un attribut de stabilité de l'étagère.
